(19) Europäisches Patentamt / European Patent Office / Office européen des brevets

(11) EP 3 489 272 A1

(12) **EUROPÄISCHE PATENTANMELDUNG**

(43) Veröffentlichungstag:
**29.05.2019 Patentblatt 2019/22**

(21) Anmeldenummer: **17203258.3**

(22) Anmeldetag: **23.11.2017**

(51) Int Cl.:
***C08G 59/50*** *(2006.01)* ***C08G 59/56*** *(2006.01)*
***C08G 59/62*** *(2006.01)* ***C04B 26/14*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **HILTI Aktiengesellschaft**
**9494 Schaan (LI)**

(72) Erfinder: **Bornschlegl, Alexander**
**81245 München (DE)**

(74) Vertreter: **Hilti Aktiengesellschaft**
**Corporate Intellectual Property**
**Feldkircherstrasse 100**
**Postfach 333**
**9494 Schaan (LI)**

(54) **MEHRKOMPONENTEN-EPOXIDHARZMASSE MIT LECKAGEINDIKATOR UND HÄRTERKOMPONENTE FÜR DIE EPOXIDHARZMASSE**

(57) Die Erfindung betrifft eine Härterzusammensetzung für eine Mehrkomponenten-Epoxidharzmasse, die wenigstens ein erstes Polyamin und wenigstens ein zweites Polyamin umfasst, sowie wenigstens ein Polyphenol aus der Gruppe der Bisphenole und Novolakharze als Beschleuniger umfasst. Bei Zutritt von Luftsauerstoff verfärbt sich die Härterzusammensetzung innerhalb weniger Tage, so dass Leckagen visuell erkannt werden können.

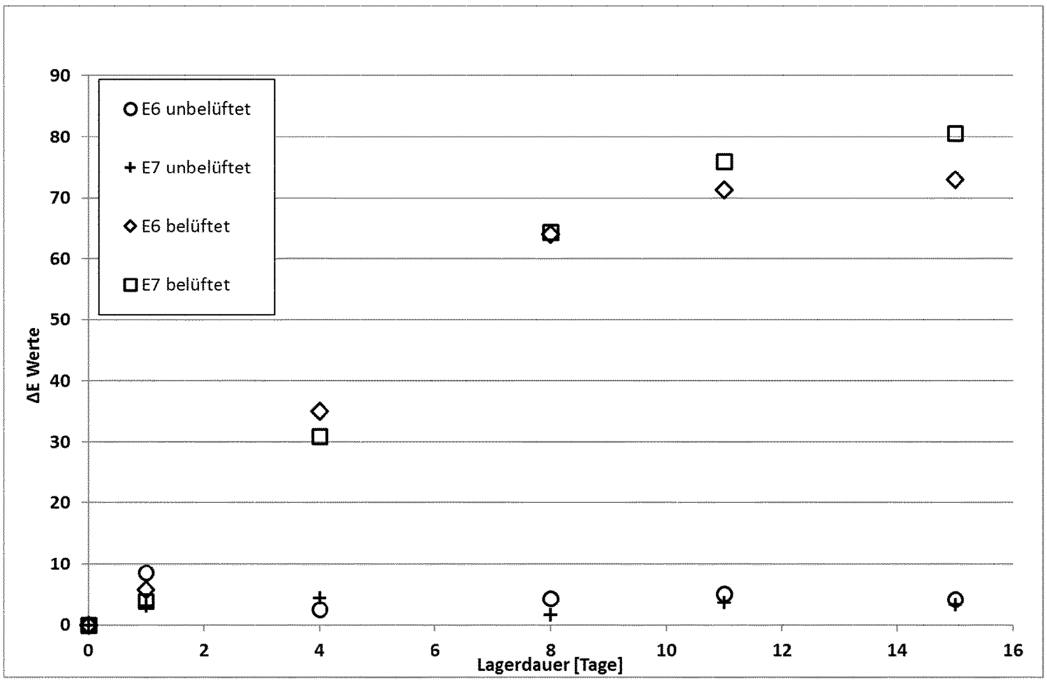


Fig. 6

EP 3 489 272 A1

**Beschreibung**

GEBIET DER ERFINDUNG

Die Erfindung betrifft eine Mehrkomponenten-Epoxidharzmasse und eine Härterkomponente für die Epoxidharzmasse mit Leckageindikator. Ferner betrifft die Erfindung die Verwendung eines Gemischs von Polyaminen in einer Härterkomponente für die Epoxidharzmasse.

TECHNISCHER HINTERGRUND

Mehrkomponenten-Mörtelmassen auf der Grundlage von härtbaren Epoxidharzen und Aminhärtern sind seit langem bekannt und werden als Klebstoffe, Spachtelmassen zur Rissverfüllung und chemische Dübel zur Befestigung von Konstruktionselementen wie Ankerstangen, Bewehrungseisen und Schrauben in Bohrlöchern verschiedenen Untergrunds verwendet.

Bei der Produktion von Mehrkomponenten-Mörtelsystemen kann es herstellungsbedingt zu Undichtigkeiten der Gebinde kommen. Bei Foliengebinden können beispielsweise Risse oder andere Verletzungen der Folie auftreten, oder es kann eine Undichtigkeit durch unvollständigen Folienverschluss stattfinden. Auch bei Hartkartuschensystemen besteht die Möglichkeit von produktionsbedingten Undichtigkeiten, beispielsweise durch Sprünge oder Risse in der Hartkartuschenwand oder durch verletzte Dichtlippen der Verschlussstopfen. Gerade Leckagen der Härterkomponente können in mehrfacher Weise zu Gefährdungen von Mensch und Gütern führen.

Die Belastbarkeit eines ausgehärteten Mehrkomponenten-Mörtelsystems hängt unter anderem vom Mischungsverhältnis und der Mischgüte von Bindemittel- und Härterkomponente ab. Da das Auspressen von Mehrkomponenten-Mörtelsystemen volumenbasiert durchgeführt wird, führt eine undichte Stelle vor dem Mischelement, beispielsweise ein Riss am Folienbeutel der Härterkomponente, zu einem vom Soll abweichenden Mischungsverhältnis und damit im Extremfall zu einer verminderten Belastbarkeit des ausgehärteten Systems.

Durch eine Undichtigkeit vor dem Mischelement kann es während des Auspressens der Komponenten ferner zu einem Druckverlust in der betroffenen Seite kommen. Dies kann ebenfalls zu einer verringerten Mischgüte und einer nichtidealen Zusammensetzung des gemischten Mörtels führen.

Da die Härterkomponente gesundheitsgefährdende Komponenten wie Polyamine enthalten kann, besteht die Gefahr, dass ausgetretener Härter den Benutzer des Produkts gefährdet, falls dieser keine persönliche Schutzausrüstung bei der Verwendung des Mehrkomponentenmörtels trägt.

Aus diesen Gründen ist daher eine Erkennung von undichten Gebinden bereits vor Auslieferung durch den Produzenten oder spätestens kurz vor der Applikation durch den Verwender wünschenswert.

Im Rahmen der Produktionskontrolle und -überwachung können fehlerhafte Gebinde durch verschiedene Maßnahmen erkannt werden. Allerdings sind diese Maßnahmen aus mehreren Gründen unvorteilhaft.

Im Rahmen von Bilderkennungsverfahren erfasst eine Zeilen- oder Flächenkamera die Verpackung, und die angeschlossene Bildauswertesoftware erkennt die Fehlstelle selbst oder ausgetretenen Härter. Eine vollständige 360°-Erfassung der Gebinde ist jedoch technisch aufwendig. Kleine Fehlstellen sind wegen der Bedruckung der Verpackung oft nicht als solche zu erkennen, insbesondere wenn noch kein Härter ausgetreten ist.

Mit spektroskopischen Verfahren, bei denen eine optische Abtasteinrichtung mit Empfindlichkeit im nichtsichtbaren Bereich des elektromagnetischen Spektrums wie Infrarot oder Ultraviolett verwendet wird, kann ausgetretener Härter anhand charakteristischer spektroskopischer Merkmale wie Schwingungsbanden, Absorptionsbanden oder anhand eines zugesetzten Indikators erkannt werden. Da zwischen einer Füllung der Gebinde und der Verpackungskontrolle jedoch nur wenige Minuten vergehen, hat der verdickte und mit anorganischen Füllstoffen wie Sand, Quarzmehl oder Zement gefüllte Härter nur unzureichend Zeit, um aus der Fehlstelle auszutreten. Deshalb werden nur große Fehlstellen erkannt, bei denen bereits nach kurzer Zeit eine große Menge Härter ausgetreten ist. Der Zusatz eines Indikators zur Härterkomponente erhöht zudem die Kosten der Formulierung. Außerdem erfordert die Durchführung einer Produktionskontrolle mit spektroskopischen Verfahren eine aufwendige Ausstattung der Produktionslinie und erhöht die laufenden Kosten.

Es besteht daher weiter Bedarf an einer Möglichkeit zur Erkennung von fehlerhaften Gebinden, bei der die Fehlstellen für das menschliche Auge visuell sichtbar sind.

Die EP 2 826 796 A1 beschreibt die Verwendung einer Härterzusammensetzung für Mehrkomponenten-Mörtelmassen auf Epoxid-Amin-Basis zur chemischen Befestigung von Konstruktionselementen. Die Mehrkomponenten-Mörtelmasse umfasst eine Epoxidharzkomponente (A), die als härtbare Verbindung mindestens ein Epoxidharz und gegebenenfalls mindestens einen Reaktivverdünner enthält, und eine Härterkomponente (B), die einen Hybridhärter enthält, wobei die Epoxidharzkomponente (A) und/oder die Härterkomponente (B) gegebenenfalls weitere Bestandteile ausgewählt unter anorganischen und/oder organischen Verbindungen enthalten können. Der Hybridhärter ist ein Gemisch aus mindestens einem aliphatischen, alicyclischen oder aromatischen Amin als Härter und einem Novolakharz

als Beschleuniger. Die Verwendung des Hybridhärters soll zu einer schnellen Aushärtung der Mehrkomponenten-Mörtelmasse auch bei tiefen Temperaturen unter vollständiger Durchhärtung der Mörtelmasse führen.

Aus der EP 1 040 150 B1 ist ebenfalls die Verwendung von Novolakharzen in Epoxidhärtern bekannt. Die Novolakharze werden als Beschleuniger in einer Konzentration von 1 bis 25 Gew.-% in der Härtungsmischung eingesetzt.

Die EP 1 838 750 B2 offenbart eine Mischung aus Polyaminen und Novolakharz in einer Konzentration von 30 bis 45 Gew.-%, bezogen auf die Härterkomponente.

Derartige Härterzusammensetzungen zeichnen sich in Kombination mit epoxidbasierten Bindemittelkomponenten bei Verwendung als chemische Dübel durch hohe Verbundspannungen aus. Die Härterzusammensetzungen sind typischerweise leicht gelb bis farblos und verfärben sich in Gegenwart von Luftsauerstoff nur langsam im Verlauf einiger Wochen. Diese Verfärbung ist deutlich zu langsam, um eine visuelle Kontrolle vor Auslieferung der Mörtelmassen vornehmen zu können.

ZUSAMMENFASSUNG DER ERFINDUNG

Die Aufgabe der vorliegenden Erfindung besteht darin, eine Formulierung für eine Härterkomponente auf Basis von Aminen zur Härtung von Epoxidharzen oder anderen mit Aminen härtbaren Kunstharzmischungen bereitzustellen, die nach Kontakt mit Luftsauerstoff bei Raumtemperatur binnen weniger Tage eine deutliche visuelle Farbveränderung im sichtbaren Bereich des elektromagnetischen Spektrums zeigt.

Die Härterzusammensetzung soll dabei keine Leistungseinbußen gegenüber einer für Mehrkomponenten-Mörtelsysteme geeigneten Referenzzusammensetzung zeigen und die Farbveränderung inhärent aufweisen, ohne Zusatz von speziellen Indikatoren. Außerdem soll die Härterzusammensetzung kompatibel zu verschiedenen Beschleunigern sein, die üblicherweise in Epoxid-Amin-Systemen eingesetzt werden.

Die der Erfindung zugrundeliegende Aufgabe wird durch Bereitstellung einer Härterzusammensetzung gemäß Anspruch 1 gelöst. Bevorzugte Ausführungsformen der erfindungsgemäßen Härterzusammensetzung sind in den Unteransprüchen angegeben, die wahlweise miteinander kombiniert werden können.

Gegenstand der Erfindung ist ferner eine Mehrkomponenten-Epoxidharzmasse gemäß Anspruch 12.

Darüber hinaus ist Gegenstand der Erfindung die Verwendung eines Gemischs aus einem Polyphenol sowie einem ersten und einem zweiten Polyamin gemäß Anspruch 14, zur Erkennung von Leckagen in einer erfindungsgemäßen Härterzusammensetzung, wobei sich die Härterzusammensetzung bei Zutritt von Luftsauerstoff innerhalb weniger Tage verfärbt.

Bevorzugte Ausführungsformen der erfindungsgemäßen Epoxidharzmasse sind in den Unteransprüchen angegeben, die wahlweise miteinander kombiniert werden können.

Erfindungsgemäß wird eine Härterzusammensetzung für eine Mehrkomponenten-Epoxidharzmasse bereitgestellt, die wenigstens ein erstes Polyamin und ein zweites Polyamin umfasst, sowie wenigstens ein Novolakharz als Beschleuniger und wahlweise einen Co-Beschleuniger.

Das erste Polyamin entspricht der folgenden allgemeinen Formel (I):

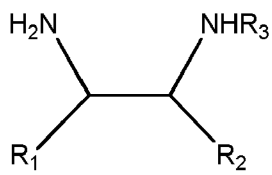 (I),

worin

$R_1$ und $R_2$ unabhängig voneinander -H oder $-CH_3$ bedeuten, oder gemeinsam eine gegebenenfalls substituierte, bevorzugt Alkyl-substituierte $C_3$- bis $C_8$-Kohlenwasserstoffkette bedeuten, die zu einem Zyklus verbunden ist, und

$R_3$ -H, $-CH_3$, $-CH_2-CH_2-NH_2$ oder $-CH_2-CH_2-NH-CH_2-CH_2-NH_2$ bedeutet.

Das zweite Polyamin entspricht der folgenden allgemeinen Formel (II) oder (III):

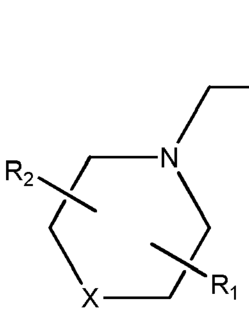 (II) oder 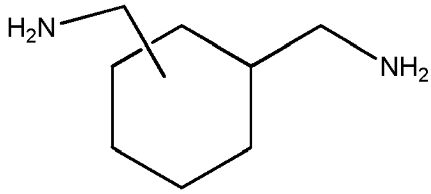 (III),

worin

$R_1$ und $R_2$ unabhängig voneinander -H oder $-CH_3$ bedeuten, und X NH, O oder S bedeutet.

Die erfindungsgemäße Härterzusammensetzung zeigt die gewünschte visuelle Verfärbung, die nur an Luftsauerstoff auftritt und bereits nach wenigen Tagen zu erkennen ist.

Die mit den erfindungsgemäßen Härtzerzusammensetzungen in voll ausformulierten Zwei- oder Mehrkomponenten-Mörtelsystemen erreichten Verbundspannungen liegen auf gleich hohem Niveau wie die Verbundspannungen von Referenzmassen, die keine Verfärbung bei Zutritt von Luftsauerstoff zur Härterkomponente zeigen.

Überraschend wurde gefunden, dass bei der Kombination eines Novalakharzes mit den vorgenannten Polyaminen, insbesondere DCH (1,2-Diaminocyclohexan) als erstes Polyamin und 1,3-BAC (1,3-Bis(aminomethyl)cyclohexan) als zweites Polyamin, eine synergistische Wirkung erzielt und bereits innerhalb wesentlich kürzerer Zeit eine visuell sichtbare Verfärbung der Härterkomponente erreicht werden kann, als in Härterkompnenten, die andere Amine und Amingemische verwenden.

Bekannt ist zwar, dass Amine im Allgemeinen, und speziell Produkte, die das Amin DCH enthalten, zu einer Verfärbung an Luftsauerstoff und Licht neigen. Die Erfinder konnten jedoch zeigen, dass nur die gezielte Auswahl der oben genannten Amine aus der Gruppe der ersten und zweiten Polyamine in Kombination miteinander zu der gewünschten schnellen Verfärbung bei Zutritt von Luftsauerstoff führt, vorzugsweise innerhalb von wenigen Stunden bis Tagen. Nichterfindungsgemäße Härterzusammensetzungen mit DCH alleine oder in Kombination mit anderen Aminen als den oben genannten Aminen aus der Gruppe der zweiten Polyamine zeigen dagegen keine Verfärbung innerhalb des gewünschten Zeitraums.

Lediglich bei der Kombination des ersten Polyamins, insbesondere von DCH, mit den Aminen aus der Gruppe der zweiten Polyamine, insbesondere 1,3-BAC und/oder Aminoethylpiperazin (AEP) konnte das gewünschte Verhalten beobachtet werden.

Die Erfinder haben weiter gefunden, dass die Zugabe anderer Stoffe, die typischerweise in Härterzusammensetzungen für Epoxidmassen verwendet werden, wie z.B. von weiteren Aminen, Beschleunigern, Silanen und/oder phenolischen Komponenten, den Effekt der schnellen Verfärbung der Zusammensetzung nicht beeinträchtigt.

BESCHREIBUNG BEVORZUGTER AUSFÜHRUNGSFORMEN

Gemäß einer bevorzugten Ausführungsform der erfindungsgemäßen Härterzusammensetzung ist das erste Polyamin aus der aus 1,2-Diaminocyclohexan, 1,2-Diaminocyclohexen, Diethylentriamin (DETA) und Triethylentetramin (TETA) und Kombinationen davon bestehenden Gruppe ausgewählt. Das zweite Polyamin ist bevorzugt aus der aus 1,3-Bis(aminomethyl)cyclohexan und Aminoethylpiperazin bestehenden Gruppe ausgewählt.

Gemäß einer weiteren bevorzugten Ausführungsform liegt das erste Polyamin in einem Anteil von 1 bis 50 Gew.-% in der Härterzusammensetzung vor, bezogen auf das Gewicht der organischen Anteile der Härterzusammensetzung, d.h. das Gewicht der Härterzusammensetzung ohne anorganische Additive, bevorzugt in einem Anteil von 5 bis 30 Gew.-%, besonders bevorzugt in einem Anteil von 5 bis 20 Gew.-%.

Das zweite Polyamin liegt bevorzugt in einem Anteil von 1 bis 50 Gew.-% in der Härterzusammensetzung vor, bezogen auf das Gewicht der organischen Anteile der Härterzusammensetzung, bevorzugt in einem Anteil von 15 bis 50 Gew.-%, besonders bevorzugt in einem Anteil von 25 bis 35 Gew.-%.

Das Polyphenol liegt bevorzugt in einem Anteil von 1 bis 40 Gew.-% in der Härterzusammensetzung vor, bezogen auf das Gewicht der organischen Anteile der Härterzusammensetzung, bevorzugt in einem Anteil von 12 bis 27 Gew.-%, besonders bevorzugt in einem Anteil von 16 bis 22 Gew.-%. Die Menge des Polyphenols sollte 40 Gew.-% nicht übersteigen, um bei Raumtemperatur eine flüssige Härterkomponente zu erhalten, die auch bei tiefen Temperaturen hinreichend niedrigviskos ist, und um die Auspresseigenschaften der Härterkomponente nicht negativ zu beeinflussen. Falls der Anteil an Polyphenol in der Härterkomponente unter 1 Gew.-% liegt, kann eine Beschleunigung der Epoxidhärtung kaum mehr beobachtet werden und der positive Effekt des Polyphenols auf die Aushärtung der Epoxidharzmasse bei Temperaturen unter +10°C kommt kaum noch zum Tragen.

Gemäß einer weiteren bevorzugten Ausführungsform der Härterzusammensetzung umfasst das Polyphenol ein Novolakharz, besonders bevorzugt ein Novolakharz, welches der folgenden Formel (IV) entspricht:

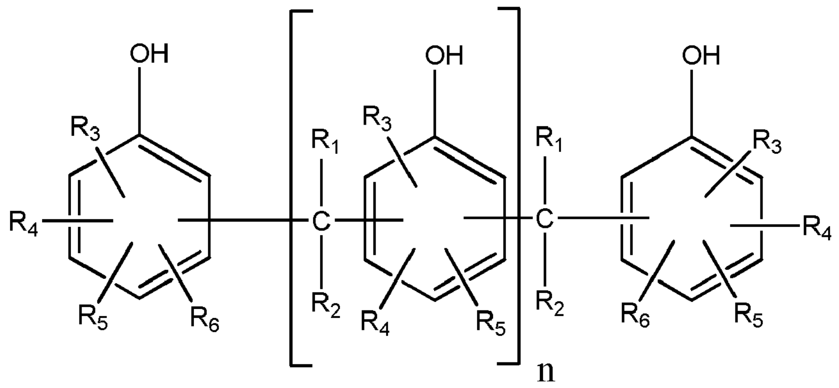

(IV),

worin

| | |
|---|---|
| $R_1$ | und $R_2$ jeweils unabhängig voneinander H oder $-CH_3$ bedeuten; |
| $R_3$, $R_4$, $R_5$ und $R_6$ | jeweils unabhängig voneinander H, $-CH_3$ oder einen aliphatischen Rest bedeuten, bevorzugt eine lineare, wahlweise teilweise ungesättigte, unverzweigte Kohlenwasserstoffkette mit bis zu 18 Kohlenstoffatomen, bevorzugt $-C_{15}H_{31}$, oder einen Alkarylrest bedeuten, bevorzugt $-C_8H_9$; und wobei |
| n | 0 bis 20 ist, bevorzugt 0 bis 6. |

Novolakharze werden durch saure Kondensation von unsubstituiertem Phenol oder substituierten Phenolderivaten mit einem Aldehyd, insbesondere Formaldehyd, erhalten, wobei das Aldehyd/Phenol-Verhältnis kleiner als 1:1 beträgt.

Bevorzugt entspricht das Novolakharz der folgenden Formel (V):

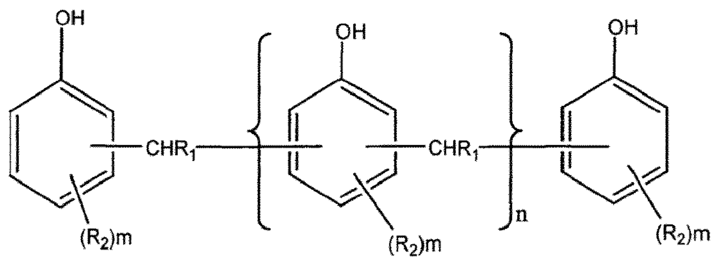

(V),

worin

| | |
|---|---|
| $R_1$ | H bedeutet, |
| $R_2$ | $C_1$-$C_{10}$-Alkyl bedeutet, bevorzugt einen Methylrest, |
| m | 0, 1 oder 2 ist, und bevorzugt 1 ist, und |
| n | 0 bis 20 ist, bevorzugt 0 bis 15, und besonders bevorzugt 0 bis 6 ist. |

Gemäß einer weiteren bevorzugten Ausführungsform der Härterzusammensetzung umfasst das Polyphenol ein Bisphenol aus der Gruppe von Bisphenol A und Bisphenol F, alleine oder zusammen mit dem oben genannten Novolakharz.

Zusätzlich zu den oben genannten Härtern aus der Gruppe der ersten und zweiten Polyamine kann die Härterzusammensetzung weitere, von dem ersten und zweiten Polyamin verschiedene Härter aus der Gruppe der Mono- und/oder Polyamine und/oder weitere Härter aus der Gruppe der Mannichbasen, Polyamidoamine oder Phenalkamine enthalten.

Die als weitere Härter für das Epoxidharz in Mehrkomponenten-Mörtelmassen geeigneten Amine sind dem

Fachmann bekannt. Insbesondere sind die Amine aus der aus aliphatischen, alicyclischen, aromatischen und araliphatischen Aminen bestehenden Gruppe ausgewählt, wobei das Amin im Mittel mindestens zwei reaktive Wasserstoffatome, gebunden an ein Stickstoffatom, pro Molekül aufweist. Hierunter fallen auch Polyamine mit mindestens zwei Aminogruppen im Molekül.

Das als weiterer Härter verwendete Amin ist bevorzugt aus der Gruppe der unverzweigten oder verzweigten $C_2$-$C_{10}$-Alkyldiamine, der $C_2$-$C_{10}$-Polyalkylen-Polyamine und der aromatischen und araliphatischen Amine ausgewählt, welche bevorzugt einen substituierten oder unsubstituierten Benzolring enthalten.

Als Monoamin ist Laurylamin bevorzugt.

Die Alkyldiamine sind bevorzugt unter 2,2,4- oder 2,4,4-Trimethyl-1,6-diaminohexan und Gemischen davon (TMD), 1-Amino-3-aminomethyl-3,5,5-trimethylcyclohexan (IPDA), 2-Methyl-1,5-pentandiamin (DYTEK A), (3(4),8(9)Bis(aminomethyl)dicyclo[5.2.1.02,6]decan und Isomerengemischen davon (TCD-Diamin), Aminomethyltricyclo[5.2.1.02,6]decan und Isomerengemischen davon (TCD-Amin) und 1,6-Hexamethylendiamin ausgewählt.

Die Polyalkylen-Polyamine sind bevorzugt unter Tetraethylenpentamin (TEPA) und Pentaethylenhexamin (PEHA) ausgewählt.

Die aromatischen sind bevorzugt unter Diethylmethylbenzoldiamin und 4,4'-Sulfonyldianiline und die araliphatischen Polyamine sind bevorzugt unter 1,3-Benzoldimethanamin (mXDA), 1,4-Benzoldimethanamin (pXDA) und N,N'-Dimethyl-1,3-benzoldimethanamin ausgewählt.

Weitere als Härter für Epoxidharze geeignete Amine sind beispielsweise 1,2-Diaminoethan(ethylendiamin), 1,3-Propandiamin, 1,4-Diaminobutan, 2,2-Dimethyl-1,3-propandiamin(neopentandiamin), Diethylaminopropylamin (DEAPA), 2-Methyl-1,5-diaminopentan, 1,3-Diaminopentan, 1-Amino-3-aminomethyl-3,5,5-trimethylcyclohexan, Hexamethylendiamin (HMD), Bis(4-aminocyclohexyl)methan, Bis(4-amino-3-methylcyclohexyl)methan, 4-Azaheptan-1,7-diamin, 1,11-Diamino-3,6,9-trioxundecan, 1,8-Diamino-3,6-dioxaoctan, 1,5-Diamino-methyl-3-azapentan, 1,10-Diamino-4,7-dioxadecan, Bis(3-aminopropyl)amin, 1,13-Diamino-4,7,10-trioxatridecan, 4-Aminomethyl-1,8-diaminooctan, 2-Butyl-2-ethyl-1,5-diaminopentan, N,N-Bis-(3-aminopropyl)methylamin, Bis(4-amino-3-methylcyclohexyl)methan, 5-(Aminomethyl)-bicyclo[[2.2.1]hept-2-yl]methylamin (NBDA, Norbornandiamin), Dimethyldipropylentriamin, Dimethylaminopropylaminopropylamin (DMAPAPA), Diaminodicyclohexylmethan (PACM), gemischte polycyclische Amine (MPCA) wie z.B. Ancamine® 2168, Dimethyldiaminodicyclohexylmethan (Laromin® C260).

In einer weiteren Ausführungsform umfasst die Härterzusammensetzung weitere Zusatzstoffe aus der Gruppe der Verdünner, Lösemittel, weitere Beschleuniger, Haftvermittler und anorganischen Füllstoffe.

Nicht reaktive Verdünnungsmittel (Lösungsmittel) können vorzugsweise in einer Menge bis zu 30 Gew.-% enthalten sein, bezogen auf die das Gesamtgewicht der Härterzusammensetzung, beispielsweise von 1 bis 20 Gew.-%. Beispiele für geeignete Lösungsmittel sind Niederalkylketone wie Aceton, Diniederalkylniederalkanoylamide wie Dimethylacetamid, Niederalkylbenzole wie Xylole oder Toluol, Phthalsäureester oder Paraffine. Bevorzugt ist die Härterzusammensetzung frei von Lösungsmitteln.

Durch den Einsatz eines Haftvermittlers wird die Vernetzung der Bohrlochwand mit der Mörtelmasse verbessert, so dass sich die Haftung im ausgehärteten Zustand erhöht. Geeignete Haftvermittler sind aus der Gruppe der Silane ausgewählt, die mit weiteren reaktiven organischen Gruppen funktionalisiert sind, wie beispielsweise 3-Glycidoxypropyltrimethoxysilan, 3-Glycidoxypropyltriethoxysilan, 2-(3,4-Epoxycyclohexyl)ethyltrimethoxysilan, N-2-(Aminoethyl)-3-aminopropylmethyl-diethoxysilan, N-2-(Aminoethyl)-3-aminopropyl-triethoxysilan, 3-Aminopropyl-trimethoxysilan, 3-Aminopropyltriethoxysilan, N-Phenyl-3-aminoethyl-3-aminopropyl-trimethoxysilan, 3-Mercaptopropyltrimethoxysilan und 3-Mercaptopropylmethyldimethoxysilan. Als Haftvermittler sind insbesondere 3-Aminopropyl-trimethoxysilan (AMMO), 3-Aminopropyltriethoxysilan (AMEO), 2-Aminoethyl-3-aminopropyl-trimethoxysilan (DAMO) und Trimethoxysilylpropyldiethylentetramin (TRIAMO) bevorzugt.

Der Haftvermittler kann in einer Menge bis zu 10 Gew.-%, bevorzugt 0,1 bis 5 Gew.-%, bezogen auf das Gesamtgewicht der Härterzusammensetzung enthalten sein.

Als Füllstoffe dienen anorganische Füllstoffe, insbesondere Zemente wie Portlandzement oder Aluminatzement sowie andere hydraulisch abbindende anorganische Stoffe, Quarz, Glas, Korund, Porzellan, Steingut, Schwerspat, Leichtspat, Gips, Talkum und/oder Kreide sowie deren Mischungen. Die anorganischen Füllstoffe können in Form von Sanden, Mehlen oder Formkörpern, vorzugsweise in Form von Fasern oder Kugeln, zugesetzt werden. Die Füllstoffe können in einer oder in allen Komponenten der Mehrkomponenten-Mörtelmasse vorhanden sein.

Der Anteil an Füllstoffen beträgt vorzugsweise 0 bis 90 Gew.-%, beispielsweise 10 bis 90 Gew.-%, bevorzugt 15 bis 75 Gew.-% und weiter bevorzugt 20 bis 50 Gew.-%, weiter bevorzugt 25 bis 30 Gew.-%, bezogen auf das Gesamtgewicht der Härterzusammensetzung.

Die anorganischen Füllstoffe sind vorzugsweise ausgewählt aus der Gruppe bestehend aus Verdickern, wie pyrogener Kieselsäure, aus Quarzsand, Quarzmehl und Zement, wie Aluminatzement und/oder Portlandzement.

Die weiteren Beschleuniger sind vorzugsweise ausgewählt aus Benzylalkohol, Salicylsäure, styrolysierten Phenolen und Cardanol.

In einer weiteren Ausführungsform kann die Härterzusammensetzung einen Co-Beschleuniger enthalten. Als

Co-Beschleuniger können beispielsweise tertiäre Amine, Imidazole oder tertiäre Aminophenole, Organophosphine, Lewis-Basen oder -Säuren wie Phosphorsäureester, oder Gemische von zwei oder mehr davon verwendet werden. Die Co-Beschleuniger können auch in der Epoxidharzkomponente (A) vorliegen, soweit sie mit den Epoxidharzen verträglich sind.

Bevorzugt sind die Co-Beschleuniger in der Härterzusammensetzung in einem Gewichtsanteil von 0,001 bis 5 Gew.-% enthalten, bezogen auf das Gesamtgewicht der Härterzusammensetzung.

Beispiele für geeignete Co-Beschleuniger sind insbesondere Tris-2,4,6-dimethylaminomethylphenol, 2,4,6-Tris(dimethylamino)phenol und Bis[(dimethylamino)methyl]phenol. Ein geeignetes Co-Beschleunigergemisch enthält 2,4,6-Tris(dimethylaminomethyl)phenol und Bis(dimethylaminomethyl)phenol. Solche Gemische sind kommerziell erhältlich, beispielsweise als Ancamine® K54 (AirProducts, Belgien).

Gegenstand der vorliegenden Erfindung ist ferner eine Mehrkomponenten-Epoxidharzmasse, bevorzugt eine Zweikomponenten-Epoxidharzmasse mit einer Epoxidharzkomponente (A), die wenigstens ein härtbares Epoxidharz enthält, und wenigstens einer Härterkomponente (B) mit der oben beschriebenen Zusammensetzung.

Die Mehrkomponenten-Epoxidmasse wird bevorzugt für Bauzwecke eingesetzt. Der Begriff "für Bauzwecke" bedeutet das Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz.

Als härtbares Epoxid in der Epoxidharzkomponente (A) kommt eine Vielzahl der hierfür dem Fachmann bekannten und kommerziell erhältlichen Verbindungen in Betracht, die im Mittel mehr als eine Epoxid-Gruppe, vorzugsweise zwei Epoxid-Gruppen, pro Molekül enthalten. Diese Epoxidharze können sowohl gesättigt als auch ungesättigt sowie aliphatisch, alicyclisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppen und ähnliche. Im Rahmen der Erfindung sind auch trimere und tetramere Epoxide geeignet.

Vorzugsweise handelt es sich bei den Epoxidharzen um Glycidylether, die sich von mehrwertigen Alkoholen, insbesondere von mehrwertigen Phenolen wie beispielsweise Bisphenolen und Novolaken, ableiten, insbesondere solchen mit einer durchschnittlichen Glycidylgruppenfunktionalität von 1,5 oder größer, insbesondere von 2 oder größer, beispielsweise von 2 bis 10.

Die Epoxidharze können ein Epoxyäquivalentgewicht von 120 bis 2000 g/EQ aufweisen, vorzugsweise von 140 bis 400, insbesondere 155 bis 195, beispielsweise 165 bis 185 aufweisen. Es können auch Mischungen mehrerer Epoxidharze verwendet werden.

Beispiele für die zur Herstellung der Epoxidharze eingesetzten mehrwertige Phenole sind Resorcin, Hydrochinon, 2,2-Bis-(4-Hydroxyphenyl)-propan (Bisphenol A), Isomerengemische des Dihydroxyphenylmethans (Bisphenol F), Tetrabrom-Bisphenol A, Novolake, 4,4'-Dihydroxyphenylcyclohexan und 4,4'-Dihydroxy-3,3'-dimethyldiphenylpropan.

Bevorzugt ist das Epoxidharz ein Diglycidylether von Bisphenol A oder von Bisphenol F oder einem Gemisch davon. Besonders bevorzugt werden flüssige Diglycidylether auf Basis von Bisphenol A und/oder F mit einem Epoxyäquivalentgewicht von 180 bis 190 g/EQ verwendet.

Weitere Beispiele sind Hexandioldiglycidylether, Trimethylolpropan-triglycidylether, beispielsweise mit einem durchschnittlichen Molekulargewicht von $Mn \leq 2000$ g/mol.

Der Anteil an Epoxidharz beträgt >0 bis 100 Gew.-%, bevorzugt 10 bis 70 Gew.-% und besonders bevorzugt 30 bis 60 Gew.-%, bezogen auf das Gesamtgewicht der Harzkomponente (A).

Neben den Epoxidharzen kann die Epoxidharzkomponente (A) wahlweise mindestens einen Reaktivverdünner enthalten. Als Reaktivverdünner werden Glycidylether von aliphatischen, alicyclischen oder aromatischen Mono- oder insbesondere Polyalkoholen verwendet, die eine geringere Viskosität als aromatische Gruppen enthaltende Epoxide aufweisen. Beispiele für Reaktivverdünner sind Monoglycidylether, z.B. o-Kresylglycidylether, und Glycidylether mit einer Epoxid-Funktionalität von mindestens 2, wie 1,4-Butandioldiglycidylether (BDDGE), Cyclohexandimethanoldiglycidylether und Hexandioldiglycidylether, sowie Tri- oder höhere Glycidylether, wie Glycerintriglycidylether, Pentaerythrittetraglycidylether oder Trimethylolpropantriglycidylether (TMPTGE). Es können auch Mischungen von zwei oder mehr dieser Reaktivverdünner verwendet werden, vorzugsweise Triglycidylether enthaltende Mischungen, besonders bevorzugt als Gemisch aus 1,4-Butandioldiglycidylether (BDDGE) und Trimethylolpropantriglycidylether (TMPTGE).

Die Reaktivverdünner liegen bevorzugt in einer Menge von 0 bis 60 Gew.-% vor, insbesondere von 1 bis 20 Gew.-%, bezogen auf das Gesamtgewicht der Harzkomponente (A).

Der Anteil der Epoxidkomponente (A) an der Gesamtmasse der Mehrkomponenten-Mörtelmasse beträgt vorzugsweise 5 bis 90 Gew.-%, insbesondere 20 bis 80 Gew.-%, 30 bis 70 Gew.-% oder 40 bis 60 Gew.-%.

Geeignete Epoxidharze und Reaktivverdünner sind auch in dem Standardwerk von Michael Dornbusch, Ulrich Christ und Rob Rasing, "Epoxidharze", Vincentz Network GmbH & Co KG (2015), ISBN 13: 9783866308770, zu finden. Diese Verbindungen werden hier durch Bezugnahme aufgenommen.

Desweiteren kann die Epoxidharzkomponente (A) übliche Zusätze enthalten, insbesondere Haftvermittler und Füllstoffe, wie bereits für die Härterzusammensetzung beschrieben.

Der Haftvermittler kann in einer Menge bis zu 10 Gew.-%, bevorzugt 0,1 bis 5 Gew.-%, bezogen auf das Gesamtgewicht der Epoxidharzkomponente (A), enthalten sein.

Der Anteil an Füllstoffen beträgt vorzugsweise 0 bis 90 Gew.-%, beispielsweise 10 bis 90 Gew.-%, bevorzugt 15 bis 75 Gew.-% und weiter bevorzugt 20 bis 50 Gew.-%, weiter bevorzugt 25 bis 30 Gew.-%, bezogen auf das Gesamtgewicht der Epoxidharzkomponente (A).

Weitere denkbare Zusätze zur Mehrkomponenten-Mörtelmasse sind ferner Thixotropiermittel wie gegebenenfalls organisch nachbehandelte pyrogene Kieselsäure, Bentonite, Alkyl- und Methylcellulosen und Rhizinusölderivate, Weichmacher wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze wie Farbstoffe oder Pigmente, beispielsweise zum unterschiedlichen Anfärben der Komponenten zur besseren Kontrolle von deren Durchmischung, ebenso wie Netzmittel, Phlegmatisiermittel, Dispergiermittel und weitere Steuerungsmittel für die Reaktionsgeschwindigkeit, oder Gemische von zwei oder mehreren davon.

Die Mehrkomponenten-Mörtelmasse liegt vorzugsweise in Patronen, Kartuschen oder Folienbeuteln vor, die dadurch gekennzeichnet sind, dass sie zwei oder mehrere voneinander getrennte Kammern umfassen, in welchen die Epoxidharzkomponente (A) und die ausgewählte Härterkomponente (B) der Mörtelmasse reaktionsinhibierend voneinander getrennt angeordnet sind.

Zur bestimmungsgemäßen Anwendung werden die Epoxidharzkomponente (A) und die ausgewählte Härterkomponente (B) aus den getrennten Kammern entleert und in einer geeigneten Vorrichtung, beispielsweise einem Statikmischer oder einem Dissolver, gemischt. Die Mischung aus Epoxidharzkomponente (A) und Härterkomponente (B) wird danach mittels einer bekannten Injektionsvorrichtung in das zuvor gereinigte Bohrloch eingebracht. Anschließend wird das zu fixierende Bauteil in die Mörtelmasse eingesetzt und justiert. Die reaktiven Bestandteile der Härterkomponente (B) reagieren mit den Epoxiden der Harzkomponente (A) unter Polyaddition, sodass die Mörtelmasse unter Umgebungsbedingungen innerhalb einer gewünschten Zeit, vorzugsweise innerhalb weniger Minuten oder Stunden, aushärtet.

Schließlich ist die Erfindung auf die Verwendung eines Gemischs aus einem Polyphenol, vorzugsweise einen Novolakharz und/oder einen Bisphenol, sowie einem ersten und einem zweiten Polyamin in einer oben beschriebenen Härterzusammensetzung zur Erkennung von Leckagen gerichtet, wobei sich die Härterzusammensetzung bei Zutritt von Luftsauerstoff innerhalb weniger Tage visuell erkennbar verfärbt.

Die Verfärbung wird als visuell erkennbar angesehen, wenn der Farbabstand $\Delta E$ des verfärbten Bereichs zur ursprünglichen Farbe der Zusammensetzung im CIELAB-Farbraum mehr als 5 Punkte, vorzugsweise mehr als 10 Punkte beträgt. Der Zeitraum, innerhalb dessen die visuell erkennbare Verfärbung auftritt soll 10 Tage nicht überschreiten, vorzugsweise zwischen 4 und 10 Tagen liegen.

## BESCHREIBUNG DER ZEICHNUNGEN

- Figur 1 zeigt den Messaufbau 1 mit Hintergrundreflektor in einer Draufsicht;
- Figur 2 zeigt den Messaufbau von Fig. 1 in einer Seitenansicht;
- Figur 3 zeigt einen vereinfachten Messaufbau 2 zur Farbmessung mit Diffusor in einer Draufsicht;
- Figur 4 zeigt den Messaufbau von Fig. 2 in einer Seitenansicht;
- Figur 5 zeigt die Position der Lampen in Messaufbau 1 in einer Seitenansicht (oben) und einer Draufsicht (unten);
- Figur 6 zeigt eine graphische Darstellung der Ergebnisse von Messreihe 1;
- Figur 7 zeigt eine graphische Darstellung der Ergebnisse von Messreihe 2;
- Figur 8 zeigt eine graphische Darstellung der Ergebnisse von Messreihe 3;
- Figur 9 zeigt eine graphische Darstellung der Ergebnisse von Messreihe 4;
- Figur 10 zeigt eine graphische Darstellung der Ergebnisse von Messreihe 5; und
- Figur 11 zeigt eine graphische Darstellung der Ergebnisse von Messreihe 6.

## AUSFÜHRLICHE BESCHREIBUNG VON AUSFÜHRUNGSBEISPIELEN DER ERFINDUNG

Weitere Vorteile der Erfindung ergeben sich aus den nachfolgenden Beispielen, die jedoch in keiner Weise als einschränkend zu verstehen sind.

**Herstellungsbeispiele**

In den Herstellungsbeispielen bedeuten die Abkürzungen:

| | |
|---|---|
| 1,3-BAC | 1,3-Bis(aminomethyl)cyclohexan, CAS# 2579-20-6, erhältlich von Mitsubishi Gas Chemicals |
| DCH | 1,2-Diaminocyclohexan, CAS# 694-83-7, erhältlich von INVISTA unter der Bezeichnung Dytek DCH-99 |
| mXDA | m-Xylendiamin, CAS# 1477-55-0, erhältlich von Mitsubishi Gas Chemicals |
| IPDA | Isophorondiamin, CAS# 2855-13-2, erhältlich von Evonik |
| AEP | Aminoethylpiperazin, CAS# 140-31-8, erhältlich von DOW Chemicals |
| TETA | Triethylentetramin, CAS# 112-24-3, erhältlich von DOW Chemicals |
| TEPA | Tetraethylenpentamin, CAS# 112-57-2, erhältlich von DOW Chemicals |
| SP | Styrolysiertes Phenol, CAS# 61788-44-1 erhältlich von Ruetgers unter der Bezeichnung LS500 |
| SA | Salicylsäure, CAS# 69-72-7, erhältlich von Sigma-Aldrich |
| DMP | 2,4,6-Tri-(dimethylamino-methyl)phenol, CAS# 90-72-2, erhältlich von AirProducts unter der Bezeichnung DMP-30 oder Ancamine K54 |
| EK | Epikure 132, eine Mannichbasen-Härterzusammensetzung, erhältlich von Hexion/Momentive |

A. Herstellung der Härterzusammensetzungen

Alle flüssigen Komponenten der Härterzusammensetzung werden gemischt, bis auf die Polyphenol-Komponente. Danach werden wahlweise die festen Additive zu der Mischung hinzugegeben. Abschließend wird die Polyphenol-Komponente unter Rühren in der Mischung gelöst.

Das so erhaltene Gemisch wurde nach vollständiger Lösung der Polyphenolkomponente in 10 mL Rollrandgläser (Durchmesser: 2,2 cm, Höhe 4,4 cm) abgefüllt und mit einem Deckel luftdicht verschlossen. Die Lagerung erfolgte in einem auf 23°C temperierten Lagerraum.

In der folgenden Tabelle 1 sind die Formulierungen der jeweils getesteten Härterzusammensetzungen zusammengefasst. Außerdem ist der für die im Folgenden beschriebenen Farbmessungen verwendete Messaufbau angegeben.

**Tabelle 1:** Formulierungen der Härterzusammensetzungen in Gew.-%

| Beispiel | Novolac | mXDA | 1,3-BAC | DCH | AEP | SP | SA | DMP | EK | BPA | total | Messaufbau |
|---|---|---|---|---|---|---|---|---|---|---|---|---|
| **E1** | 20 | 80 | | | | | | | | | 100 | 1 |
| **E2** | 20 | | 80 | | | | | | | | 100 | 1 |
| **E3** | 20 | | | 80 | | | | | | | 100 | 1 |
| **E4** | 20 | 24 | 56 | | | | | | | | 100 | 1 |
| **E5** | 20 | 52 | | 28 | | | | | | | 100 | 1 |
| **E6** | 20 | | 56 | 24 | | | | | | | 100 | 1 |
| **E7** | 20 | 20 | 49 | 11 | | | | | | | 100 | 1 |
| **E8** | 20 | 24 | 56 | | | | | | | | 100 | 2 |
| **E9** | 20 | | | 40 | 40 | | | | | | 100 | 2 |
| **E10** | 20 | | 61 | 14 | 5 | | | | | | 100 | 2 |
| **E11** | 20 | | 61 | 14 | | | | 5 | | | 100 | 2 |
| **E12** | 20 | | 61 | 14 | | | 5 | | | | 100 | 2 |
| **E13** | 20 | | 61 | 14 | | 5 | | | | | 100 | 2 |
| **E14** | 20* | | 70 | 10 | | | | | | | 100 | 2 |

(fortgesetzt)

| Beispiel | Novolac | mXDA | 1,3-BAC | DCH | AEP | SP | SA | DMP | EK | BPA | total | Messaufbau |
|---|---|---|---|---|---|---|---|---|---|---|---|---|
| E18 | | | 50 | 10 | | | | | 40 | | 100 | 2 |
| E15 | | | 80 | 10 | | | | | | 10 | 100 | 2 |
| E16 | | 90 | | | | | | | | 10 | 100 | 2 |
| E19 | | | 50 | | | | | | 50 | | 100 | 2 |
| E17 | | | 82 | 18 | | | | | | | 100 | 2 |

B. Farbmessungen

*Messaufbau*

Für die Farbmessungen wurde das ColorCatcher®-System der Firma Techkon GmbH verwendet. Dieses System ermöglicht die Durchführung von farbverbindlichen Messungen durch Verwendung der Kamera eines handelsüblichen Smartphones und einer geeigneten Software in Verbindung mit einer Kalibrierungsfarbkarte (ColorChart). Die Kalibrierungsfarbkarte enthält verschiedene Farbbereiche als Referenz und eine Aussparung, die den Blick auf einen Teilbereich des unter der Karte gelegenen Objekts ermöglicht.

Zur Durchführung einer Messung, wird die Karte auf das zu messende Objekt gelegt und mittels der auf dem Smartphone installierten Software ("App") ein Foto aufgenommen, das mindestens den gesamten Bereich der Kalibrierungsfarbkarte abdeckt. Die Messwerte im gewünschten Farbsystem werden dann auf dem Display des Mobilgeräts angezeigt. Für die Messungen wurde ein iPhone 6 verwendet.

Die Figuren 1 bis 4 zeigen die für die Messungen verwendeten Messaufbauten 1 und 2. Die Figur 1 zeigt den Messaufbau 1 mit Hintergrundreflektor in der Draufsicht. Die Figur 2 zeigt denselben Messaufbau mit Hintergrundreflektor in der Seitenansicht.

Die Figur 3 zeigt einen vereinfachten Messaufbau 2 mit Diffusor um das Messgefäß in der Draufsicht. Die Figur 4 zeigt denselben vereinfachten Messaufbau 2 mit Diffusor um das Messgefäß in der Seitenansicht.

In den Figuren 1 bis 4 bedeutet:

1: Smartphone mit installierter ColorCatcher Software
2: ColorChart-Kalibrierungsfarbkarte
3: Rollrandglas mit Härtermischung
4: Sockel
5: Lichtquelle
6: Lichtreflektor (weißer Karton)
7: Lichtdiffusor (weißes Blatt Papier 80 g/$m^2$)

Als Lichtquelle (5) kommt eine Beleuchtungseinrichtung vom Typ HFB RB500 DL (Kaiser Fototechnik GmbH & Co.KG; Artikelnummer 5556) zum Einsatz, die mit zwei Tageslichtleuchtstoffröhren vom Typ Dulux L 36 W/12-950 (Firma Osram) bestückt ist.

Die Figur 5 zeigt die Anordnung der Lichtquelle in Bezug zu den Messaufbauten.

Die an den beiden Stativarmen (8) befestigten Lichtwannen (9) werden auf den mittig positionierten Messaufbau (10) ausgerichtet. Die mit Klemmhalterungen versehenen Stativarme sind derart am rückwärtigen Ende einer Grundplatte der Abmessungen 50 cm x 45 cm angebracht und positioniert, dass die beiden Lichtwannen in einer Höhe h von 35 cm und einer Distanz d von 22 cm zu liegen kommen.

*Messverfahren und Farbraum*

Im Rahmen der Farbmessung werden die Farben der jeweiligen Härterzusammensetzungen im CIELAB-Farbraum ermittelt und dargestellt. Das CIELAB-Farbmodell basiert auf den Normalspektralwertfunktionen die durch Referenzversuchen mit einer großen Zahl an normalsichtigen Versuchspersonen ermittelt wurden.

Der CIELAB-Farbraum berücksichtigt somit die Farbwahrnehmung des menschlichen Auges und ist daher besonders geeignet, um Aussagen zur Wahrnehmbarkeit einer Farbveränderung zu machen. Zudem handelt es um eine in der graphischen Industrie weit verbreitete Methode (zur Normalspektralwertfunktion siehe: E. Lübbe; Farbempfindung, Farbbeschreibung und Farbmessung, Springer Vieweg 2013; S. 22ff; zum CIELAB-Farbraum, siehe: E. Lübbe;

Farbempfindung, Farbbeschreibung und Farbmessung, Springer Vieweg 2013; S. 86ff).

Der CIELAB-Farbraum wird durch die drei Achsen L*, a* und b* aufgespannt, wobei

- L* für die Luminanz-Achse
- a* für die Grün-Rot-Achse
- b* für die Blau-Gelb-Achse

steht.

Mit diesen drei Koordinaten kann ein Farbort im CIELAB-Farbraum beschrieben werden.

Der Farbabstand ΔE von zwei Farben im CIELAB-Farbraum lässt sich über folgende Formel berechnen:

$$\Delta E = \sqrt{\Delta L^{*2} + \Delta a^{*2} + \Delta b^{*2}}\Delta$$

wobei ΔL* die Differenz der Luminanzwerte der beiden Farben bedeutet, Δa* die Differenz der beiden Grün-Rot-Werte darstellt und Δb* die Differenz der beiden Blau-Gelb-Werte darstellt (vgl. E. Lübbe; Farbempfindung, Farbbeschreibung und Farbmessung, Springer Vieweg 2013; S. 131).

Je größer der Wert von ΔE, desto größer ist auch der wahrgenommene Farbunterschied, weshalb in den folgenden Versuchen der ΔE-Wert als Maß für die visuell wahrnehmbare Farbveränderung verwendet wird.

*Praktische Durchführung der Farbmessungen*

Das Rollrandglas mit der zu messenden Härterzusammensetzung wird im jeweiligen Messaufbau in die Messposition gebracht. Nach dem Einschalten der Beleuchtung wird die auf dem Smartphone installierte ColorCatcher-Anwendung gestartet und gemäß den Anweisungen eine Farbmessung durchgeführt.

Für jedes Rollrandglas werden drei Farbmessungen hintereinander durchgeführt und dann das arithmetische Mittel der erhaltenen Werte für L*, a* und b* gebildet.

*Ergebnisse der Farbmessungen*

Messreihe 1: Verfärbung bei Zutritt von Luftsauerstoff

Zwei erfindungsgemäße Härterzusammensetzungen gemäß den Beispielen E6 und E7 wurden in je zwei 10 mL Rollrandgläser (Durchmesser: 2,2 cm, Höhe 4,4 cm) gefüllt, mit einem Deckel verschlossen und in einem mit Tageslicht-beleuchteten Raum bei 23°C gelagert. Die Gläser wurden jeweils nur zu ca. 70% gefüllt, um einen Überstand an Luft sicherzustellen.

Jeweils ein mit einer Härterzusammensetzung gefülltes Rollrandglas wurde 1x täglich manuell geschüttelt und dann 20 Sekunden lang geöffnet, um den Zutritt von Luftsauerstoff zu ermöglichen. Die Vergleichsproben blieben verschlossen und wurden in dieser Zeit nur 1x täglich geschüttelt.

Am Tag der Herstellung und nach 1, 4, 8, 13 und 15 Tagen wurden Farbmessungen an allen vier Proben unter Verwendung des Messaufbaus 1 durchgeführt.

Die in Figur 5 dargestellten Ergebnisse der Messreihe 1 zeigen, dass eine Verfärbung der erfindungsgemäßen Härterzusammensetzungen nur bei Zutritt von Luftsauerstoff erfolgt. Bereits nach vier Tagen ist ein deutlicher Unterschied in den ΔE-Werten der belüfteten Proben E6 und E7 zu den unbelüfteten Proben feststellbar. Die unbelüfteten Proben der Beispiele E6 und E7 zeigen selbst nach 15 Tagen keine wesentliche Farbveränderung.

Da die Verfärbung der erfindungsgemäßen Härterzusammensetzungen nur bei Zutritt von (Luft-)sauerstoff eintritt, ist sichergestellt, dass die Verfärbung in handelsüblich verpackten Härterzusammensetzungen nur an Defektstellen wie z.B. Rissen der Verpackung auftritt.

Messreihe 2: Verfärbung im Vergleich zu Referenz-Zusammensetzungen

Härterzusammensetzungen gemäß den Beispielen E1 bis E5 (Referenz) sowie E6 und E7 (erfindungsgemäß) wurden in 10 mL Rollrandgläser (Durchmesser: 2,2 cm, Höhe 4,4 cm) gefüllt, mit einem Deckel verschlossen und in einem mit Tageslicht beleuchteten Raum bei 23°C gelagert. Die Gläser wurden jeweils nur zu ca. 70% gefüllt, um einen Überstand an Luft sicherzustellen.

Die Rollrandgläser wurden 1x täglich manuell geschüttelt und dann 20 Sekunden lang geöffnet, um den Zutritt von Luftsauerstoff zu ermöglichen.

Am Tag der Herstellung und nach 1, 4 und 11 Tagen wurden Farbmessungen an allen Proben unter Verwendung

des Messaufbaus 1 durchgeführt.

Die Ergebnisse der Messreihe 2 sind in Figur 6 graphisch dargestellt. Die Farbmessungen der Messreihe 2 zeigen, dass die erfindungsgemäßen Härterzusammensetzungen E6 und E7 bereits nach 4 Tagen eine wesentlich stärkere, visuell erkennbare Verfärbung zeigen als die Referenzmischungen E1 bis E5. Die ΔE-Werte der Referenz-Zusammensetzungen liegen bereits nach vier Tagen bei nur etwa 30% der ΔE-Werte der erfindungsgemäßen Proben E6 und E7.

Messreihe 3: Ersatz von 1,3-BAC durch AEP

Härterzusammensetzungen gemäß den Beispielen E8 (Referenz) und E9 (erfindungsgemäß) wurden in 10mL Rollrandgläser (Durchmesser: 2,2 cm, Höhe 4,4 cm) gefüllt, mit einem Deckel verschlossen und in einem mit Tageslicht-beleuchteten Raum bei 23°C gelagert. Die Gläser wurden jeweils nur zu ca. 70% gefüllt, um einen Überstand an Luft sicherzustellen. Die Rollrandgläser wurden 1x täglich manuell geschüttelt und dann 20 Sekunden lang geöffnet, um Zutritt von Luftsauerstoff zu ermöglichen.

Am Tag der Herstellung und dann wieder nach 2, 6, und 8 Tagen wurden Farbmessungen an allen Proben unter Verwendung des Messaufbaus 2 durchgeführt.

Die Ergebnisse der Messreihe 3 sind in Figur 7 graphisch dargestellt. Die erfindungsgemäße Härterzusammensetzung von Beispiel E9 enthält als zweites Polyamin die Verbindung AEP anstelle von 1,3-BAC. Auch diese Härterzusammensetzung zeigt bereits nach 2 Tagen eine stärkere Verfärbung als die Referenz-Zusammensetzung E8, wobei der ΔE-Wert der Referenz-Zusammensetzung sich nach 2 Tagen kaum noch verändert und nach 8 Tagen bei nur etwa 20 % des ΔE-Wertes der erfindungsgemäßen Zusammensetzung E9 liegt.

Auch eine Härterzusammensetzung, bei der DCH als erstes Polyamin und AEP als zweites Polyamin eingesetzt wird, zeigt somit die gewünschte deutliche Farbveränderung, während die Referenz-Zusammensetzung E8 im gleichen Zeitraum keine ungewöhnlich starke Farbveränderung erreicht. Die in Figur 7 dargestellte Messreihe 3 zeigt somit, dass das sowohl das Amin AEP als auch Amin 1,3-BAC in einer erfindungsgemäßen Härtzerzusammensetzung als zweites Polyamin verwendet werden können.

Messreihe 4: Farbveränderung bei Zugabe von Additiven

Härterzusammensetzungen gemäß den Beispielen E8 (Referenz) und E10 bis E13 (erfindungsgemäß) wurden jeweils in 10mL Rollrandgläser (Durchmesser: 2,2 cm, Höhe 4,4 cm) gefüllt, mit einem Deckel verschlossen und in einem mit Tageslicht beleuchteten Raum bei 23°C gelagert. Die Gläser wurden jeweils nur zu ca. 70% gefüllt, um einen Überstand an Luft sicherzustellen. Die Rollrandgläser wurden 1x täglich manuell geschüttelt und dann 20 Sekunden lang geöffnet, um den Zutritt von Luftsauerstoff zu ermöglichen.

Am Tag der Herstellung und dann wieder nach 2, 6, und 8 Tagen wurden Farbmessungen an allen Proben unter Verwendung des Messaufbaus 2 durchgeführt. Die Ergebnisse der Messreihe 4 sind in Figur 8 graphisch dargestellt.

Die Ergebnisse der Farbmessungen zeigen, dass die erfindungsgemäßen Härterzusammensetzungen E10 bis E13 auch bei Verwendung einer Kombination von 1,3-BAC und AEP als zweites Polyamin (Beispiel E10) und/oder bei Zugabe weiterer Additive eine deutliche Farbveränderung zeigen, die typischerweise in Härterzusammensetzungen für Epoxidmassen verwendet werden. Derartige Additive sind beispielsweise eine Kombination aus Phenol mit tertiären Aminen (DMP-30, Beispiel E11), Salicylsäure (Beispiel E12) und styrolysiertes Phenol (Beispiel E13). Der ΔE-Wert der Referenz-Zusammensetzung verändert sich nach 2 Tagen kaum noch liegt spätestens nach 6 Tagen bei nur etwa 20 % des ΔE-Wertes der erfindungsgemäßen Zusammensetzungen.

Messreihe 5: Verwendung weiterer Polyphenole

Härterzusammensetzungen gemäß den Beispielen E14 und E15 (erfindungsgemäß) sowie Zusammensetzungen gemäß den Beispielen E16 und E17 (Referenz) wurden in 10mL Rollrandgläser (Durchmesser: 2,2 cm, Höhe 4,4 cm) gefüllt, mit einem Deckel verschlossen und in einem mit Tageslicht beleuchteten Raum bei 23°C gelagert. Die Gläser wurden jeweils nur zu ca. 70% gefüllt, um einen Überstand an Luft sicherzustellen. Die Rollrandgläser wurden 1x täglich manuell geschüttelt und dann 20 Sekunden lang geöffnet, um Zutritt von Luftsauerstoff zu ermöglichen.

Am Tag der Herstellung und dann wieder nach 1, 2, 4 und 8 Tagen wurden Farbmessungen an allen Proben unter Verwendung des Messaufbaus 2 durchgeführt. Die Ergebnisse der Messreihe 5 sind in Figur 9 graphisch dargestellt.

Die Zusammensetzung gemäß Beispiel E14 enthält den Novolak Supraplast 3616 der Firma SWC und die Zusammensetzung gemäß Beispiel E15 Bisphenol Aals Polyphenol. Beide Zusammensetzungen zeigen bereits nach wenigen Tagen eine wesentlich stärkere Verfärbung als die beiden Referenz-Zusammensetzungen E16 und E17. Der ΔE-Wert der Referenz-Zusammensetzungen liegt auch nach 8 Tagen unterhalb von 5, während die ΔE-Werte der erfindungsgemäßen Zusammensetzungen bereits nach 2 Tagen schon oberhalb von 10 und nach 8 Tagen deutlich

oberhalb von 20-30 liegen.

Die nicht-erfindungsgemäße Referenz-Zusammensetzung E16 enthält ein Gemisch aus einem erfindungsgemäßen Polyphenol (Bisphenol A) und dem nicht-erfindungsgemäßen Polyamin mXDA. Die nicht-erfindungsgemäße Referenz-Zusammensetzung E17 enthält die gemäß der Erfindung verwendete Kombination der Polyamine 1 und 2, jedoch kein Polyphenol. Aus der Messreihe 5 ergibt sich, dass auch mit anderen Polyphenolen als Novolak in den erfindungsgemäßen Härterzusammensetzungen eine deutliche Farbveränderung bei Zutritt von Luftsauerstoff erzielt werden kann.

Messreihe 6: Verwendung weitere Polyphenole

Härterzusammensetzungen gemäß Beispiel E18 (erfindungsgemäß) sowie den Beispielen E16 und E19 (Referenz) wurden in 10mL Rollrandgläser (Durchmesser: 2,2 cm, Höhe 4,4 cm) gefüllt, mit einem Deckel verschlossen und in einem mit Tageslicht beleuchteten Raum bei 23°C gelagert. Die Gläser werden jeweils nur zu ca. 70% gefüllt, um einen Überstand an Luft sicherzustellen. Die Rollrandgläser wurden 1x täglich manuell geschüttelt und dann 20 Sekunden lang geöffnet, um Zutritt von Luftsauerstoff zu ermöglichen.

Am Tag der Herstellung und dann wieder nach 1, 2 und 4 Tagen wurden Farbmessungen an allen Proben unter Verwendung des Messaufbaus 2 durchgeführt. Die Ergebnisse der Messreihe 6 sind in Figur 10 graphisch dargestellt.

Die Härterzusammensetzung gemäß Beispiel E18 enthält eine Mischung aus Epikure 132 und den beiden erfindungsgemäß verwendeten Polyaminen 1,3-BAC und DCH. Epikure 132 ist eine Mannichbase aus dem Amin mXDA und Bisphenol A, die in überschüssigem mXDA gelöst ist. Die Mannichbase besitzt noch zwei phenolische Gruppen und stellt daher eine Polyphenol gemäß der Erfindung dar. Zudem liegt in dem kommerziell verfügbaren Produkt Epikure 132 noch ein Restgehalt an freiem Bisphenol A vor. Die Referenz-Zusammensetzung gemäß Beispiel 16 enthält die Mannichbase Epikure 132 und das Amin mXDA. Die Referenz-Zusammensetzung gemäß Beispiel 19 enthält die Mannichbase Epikure 132 und das Polyamin 1,3-BAC, jedoch keine Verbindung aus der Gruppe der ersten Polyamine.

Erwartungsgemäß zeigt die Härterzusammensetzung gemäß Beispiel 18 eine deutliche Farbveränderung bei Zutritt von Luftsauerstoff, während die beiden Referenz-Zusammensetzungen E16 und E19 nicht die gewünschte deutliche Farbveränderung zeigen. Die ΔE-Werte der Referenz-Zusammensetzungen E16 und E19 steigen auch nach 8 Tagen nicht über den Wert 2, während der ΔE-Wert der erfindungsgemäßen Zusammensetzung E18 bereits nach 4 Tagen bereits bei etwa 7 liegt.

Die Messreihe 6 bestätigt, dass auch andere Polyphenole als Novolak in den erfindungsgemäßen Härterzusammensetzungen verwendet werden können.

C. Herstellung von Epoxid-Mörtelmassen und Messung der Verbundspannung

Die Härterzusammensetzungen gemäß den Beispielen E1, E2, E4, E6, E11 und E18 wurden gemäß folgender Tabelle 2 mit anorganischen Additiven gefüllt und als Härterkomponente B im stöchiometrisch korrekten Verhältnis mit einer ebenfalls mit Füllstoffen versetzten Epoxidharzmischung (Komponente A) gemischt. Die Zusammensetzung der Epoxidharzmasse ist in der nachfolgenden Tabelle 3 angegeben.

Die so hergestellten Komponenten der Mörtelmasse wurden in einem im Dissolver (PC Laborsystem, Volumen 1L) 10 min lang unter Vakuum bei 3500 U/min gemischt und zur Verankerung einer Gewindestange in Beton verwendet.

Als Epoxidharze wurden in den Beispielen 1 bis 3 die im Handel unter den Bezeichnungen DER 330 und DER 354 (Dow Europe) erhältlichen Epoxidharze auf Basis von Bisphenol A bzw. Bisphenol F verwendet.

Der Haftvermittler war 3-Glycidyloxypropyl-trimethoxysysilan, erhältlich unter der Bezeichnung Dynasylan GLYMO™ (Evonik Industries).

Als Reaktivverdünner wurden 1,4-Butandiol-diglycidylether und Trimethyolpropan-triglycidylether verwendet, die im Handel unter den Bezeichnungen Epilox P 13-21 (Leunaharze) und Araldite™ DY-T (Huntsman) erhältlich sind.

Als Füllstoff wurde eine unter dem Handelsnamen Millisil™ W12 der Firma Quarzwerke Frechen erhältliche Mischung verwendet, die Quarzmehl und gegebenenfalls Aluminatzement enthält. Die als Verdicker verwendete pyrogene Kieselsäure ist im Handel unter dem Namen Cab-O-Sil™ TS-720 von Cabot Rheinfelden erhältlich.

Die Ermittlung der Verbundspannung oder Versagenslast erfolgte durch zentrische Auszugsversuche von je drei Ankerstangen pro Mörtelmasse. Verwendet wurden Ankerstangen M12 mit einer Setztiefe von 72 mm und einem Bohrlochdurchmesser von 14 mm. Die Bohrlöcher wurden mittels eines Kombihammers der Firma Hilti vom Typ TE-40 erstellt. Als Bohrer kam ein TE-CX 14mm Bohrer zum Einsatz. Die Bohrlöcher wurden mit Drahtbürste und Druckluftlanze (6 bar) gereinigt. Der verwendete Beton hatte die Festigkeitsklasse C20/25. Die Aushärtedauer betrug 24 Stunden bei 23°C. Die durch die Auszugstests ermittelte Verbundspannung der Mörtelmassen ist in nachstehender Tabelle 4 gezeigt.

Die Durchführung der Auszugsversuche erfolgte analog den in der "European Organisation for Technical Approvals" (EOTA) (2001): ETAG N°001 Ausgabe November 2006: Leitlinie für europäische technische Zulassung für

Metalldübel zur Verankerung im Beton, Teil 5: Verbunddübel, Februar 2008, unter 5.1.2.1 (b) beschriebenen Bedingungen, wobei die Betondruckfestigkeiten des für die Auszugsversuche verwendeten Betons 30,9 MPa betrug.

**Tabelle 2:** Zusammensetzung der Härterkomponente B

| Härterzusammensetzung | Gew.-% |
|---|---|
| Amine/Polyphenol | 61,5 |
| Füllstoffe | 35 |
| Pyrogene Kieselsäure (hydrophob) | 3,5 |

**Tabelle 3:** Zusammensetzung der Epoxidharzkomponente A

| Harzkomponentenzusammensetzung | Gew.-% |
|---|---|
| 3-Glycidyloxypropyltrimethosysilan<br>Bisphenol A-basiertes Epoxidharz | 2,5<br>30 |
| Bisphenol F-basiertes Epoxidharz | 17 |
| 1,4-Butandiol-diglycidylether<br>Trimethyolpropan-triglycidylether<br>Quarzmehl | 6<br>6<br>36 |
| Pyrogene Kieselsäure (hydrophob) | 2,5 |

**Tabelle 4:** Mittlere Versagenslast der erfindungsgemäßen Mörtelmassen

| Härterkomponente | Verbundspannung [N/mm$^2$] |
|---|---|
| E1 | 36,9 |
| E2 | 37,8 |
| E4 | 38,0 |
| E6 | 36,8 |
| E11 | 37,6 |
| E18 | 37,8 |

Die Ergebnisse zeigen, dass die Verbundspannung der mit den erfindungsgemäßen Härterzusammensetzungen E6, E11 und E18 hergestellten Mörtelmassen vergleichbar mit den unter Verwendung der nichterfindungsgemäßen Referenz-Zusammensetzungen E1, E2 und E4 sind. Alle Werte liegen in dem für Mörtelmassen auf Basis von Epoxidharzen zu erwartenden Verbundspannungsniveau. Die erfindungsgemäßen Härterzusammensetzungen eignen sich somit für die Verwendung in Mörtelmassen für chemische Befestigungsmittel.

## Patentansprüche

1. Härterzusammensetzung für eine Mehrkomponenten-Epoxidharzmasse, die wenigstens ein erstes Polyamin und wenigstens ein zweites Polyamin umfasst, sowie wenigstens ein Polyphenol aus der Gruppe der Bisphenole und Novolakharze als Beschleuniger,
   wobei das erste Polyamin der folgenden allgemeinen Formel (I) entspricht:

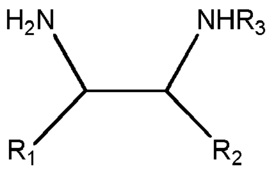

(I),

worin

$R_1$ und $R_2$ unabhängig voneinander -H oder $-CH_3$ bedeuten, oder gemeinsam eine gegebenenfalls substituierte $C_3$- bis $C_8$-Kohlenwasserstoffkette bedeuten, die zu einem Zyklus verbunden ist, und
$R_3$ -H, $-CH_3$, $-CH_2-CH_2-NH_2$ oder $-CH_2-CH_2-NH-CH_2-CH_2-NH_2$ bedeutet,

und wobei
das zweite Polyamin der folgenden allgemeinen Formel (II) oder (III) entspricht:

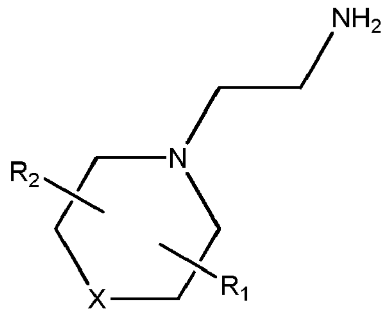

(II)

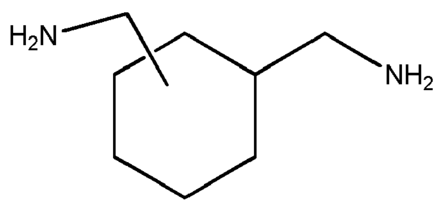

(III),

worin

$R_1$ und $R_2$ unabhängig voneinander -H oder $-CH_3$ bedeuten, und
X NH, O oder S bedeutet.

2. Härterzusammensetzung nach Anspruch 1, **dadurch gekennzeichnet, dass** das erste Polyamin aus der aus 1,2-Diaminocyclohexan, 1,2-Diaminocyclohexen, Dieethylentriamin und Triethylentetramin sowie Mischungen davon bestehenden Gruppe ausgewählt ist.

3. Härterzusammensetzung nach Anspruch 1 oder 2, **dadurch gekennzeichnet, dass** das zweite Polyamin aus 1,3-Bis(aminomethyl)cyclohexan und Aminoethylpiperazin sowie Mischungen davon ausgewählt ist.

4. Härterzusammensetzung nach einem der vorhergehenden Ansprüche, **dadurch gekennzeichnet, dass** das erste Polyamin in einem Anteil von 1 bis 50 Gew.-% vorliegt, bezogen auf das Gewicht der organischen Anteile der Härterzusammensetzung, bevorzugt in einem Anteil von 5 bis 30 Gew.-%, besonders bevorzugt in einem Anteil von 5 bis 20 Gew.-%.

5. Härterzusammensetzung nach einem der vorhergehenden Ansprüche, **dadurch gekennzeichnet, dass** das zweite Polyamin in einem Anteil von 1 bis 50 Gew.-% vorliegt, bezogen auf das Gewicht der organischen Anteile der Härterzusammensetzung.

6. Härterzusammensetzung nach einem der vorhergehenden Ansprüche, **dadurch gekennzeichnet, dass** das Polyphenol in einem Anteil von 1 bis 40 Gew.-% vorliegt, bezogen auf das Gewicht der organischen Anteile der Härterzusammensetzung.

7. Härterzusammensetzung nach einem der vorhergehenden Ansprüche, **dadurch gekennzeichnet, dass** das Polyphenol ein Novolakharz umfasst, welches der folgenden Formel (IV) entspricht:

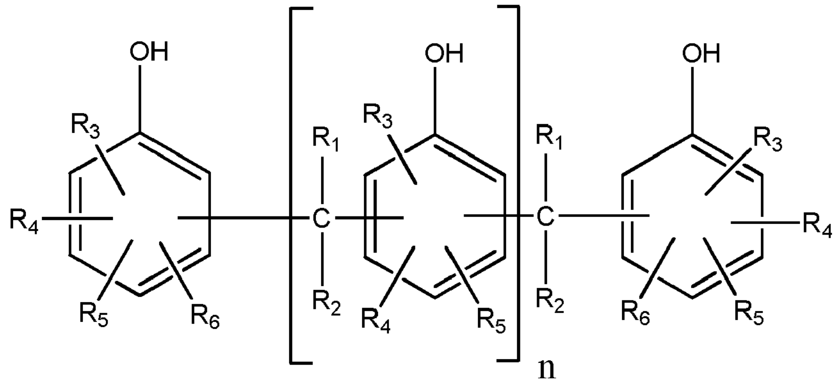

(IV),

worin
$R_1$ und $R_2$ jeweils unabhängig voneinander -H oder $-CH_3$ bedeutet;
$R_3$, $R_4$, $R_5$ und $R_6$ jeweils unabhängig voneinander -H, $-CH_3$ oder einen aliphatischen Rest bedeuten; und wobei n 0 bis 20 ist.

8. Härterzusammensetzung nach einem der vorhergehenden Ansprüche, **dadurch gekennzeichnet, dass** das Polyphenol ein Novolakharz umfasst, welches der folgenden Formel (V) entspricht:

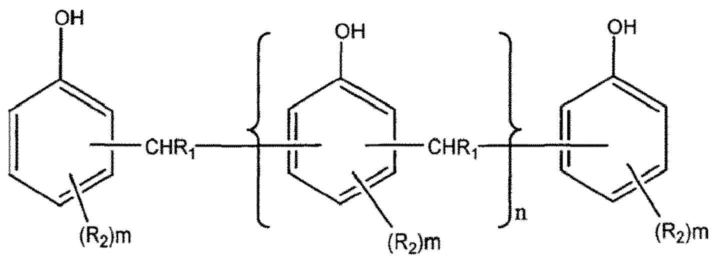

(V),

worin
$R_1$ H bedeutet,
$R_2$ $C_1$- bis $C_{10}$-Alkyl bedeutet,
m 0, 1 oder 2 ist, und
n 0 bis 20 ist.

9. Härterzusammensetzung nach einem der vorhergehenden Ansprüche, **dadurch gekennzeichnet, dass** das Polyphenol ein Bisphenol aus der Gruppe von Bisphenol A und Bisphenol F umfasst.

10. Härterzusammensetzung nach einem der vorhergehenden Ansprüche, **dadurch gekennzeichnet, dass** die Härterzusammensetzung weitere Mono- und/oder Polyamine umfasst, und/oder weitere Härter für Epoxidharze umfasst ausgewählt aus der Gruppe der Mannichbasen, Polyamidoamine oder Phenalkamine.

11. Härterzusammensetzung nach einem der vorhergehenden Ansprüche, **dadurch gekennzeichnet, dass** die Härterzusammensetzung weitere Zusatzstoffe aus der Gruppe der Verdünner, Lösemittel, Beschleuniger, Silane, Verdicker und anorganischen Füllstoffe umfasst.

12. Mehrkomponenten-Epoxidharzmasse mit
einer Epoxidharzkomponente (A), die wenigstens ein härtbares Epoxidharz und wahlweise einen Reaktivverdünner enthält,

wenigstens eine Härterkomponente (B) gemäß einem der vorhergehenden Ansprüche,
wobei die Epoxidharzkomponente und die Härterkomponente getrennt voneinander vorliegen.

**13.** Mehrkomponenten-Epoxidharzmasse nach Anspruch 12, wobei die Mehrkomponenten-Epoxidharzmasse weitere Zusätze umfasst, die aus der aus Co-Beschleunigern, Haftvermittlern, Reaktivverdünnern, Verdickern und Füllstoffen bestehenden Gruppe ausgewählt sind.

**14.** Verwendung eines Gemischs aus einem Polyphenol sowie einem ersten und einem zweiten Polyamin in einer Härterzusammensetzung gemäß einem der Ansprüche 1 bis 11 zur Erkennung von Leckagen, wobei sich die Härterzusammensetzung bei Zutritt von Luftsauerstoff innerhalb weniger Tage visuell erkennbar verfärbt.

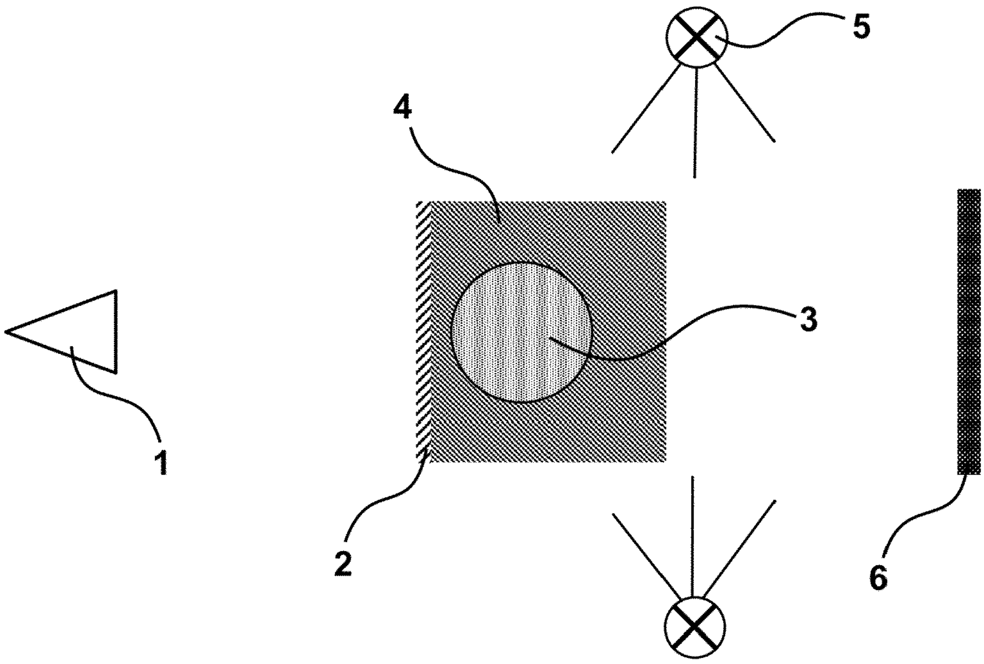


Fig. 1

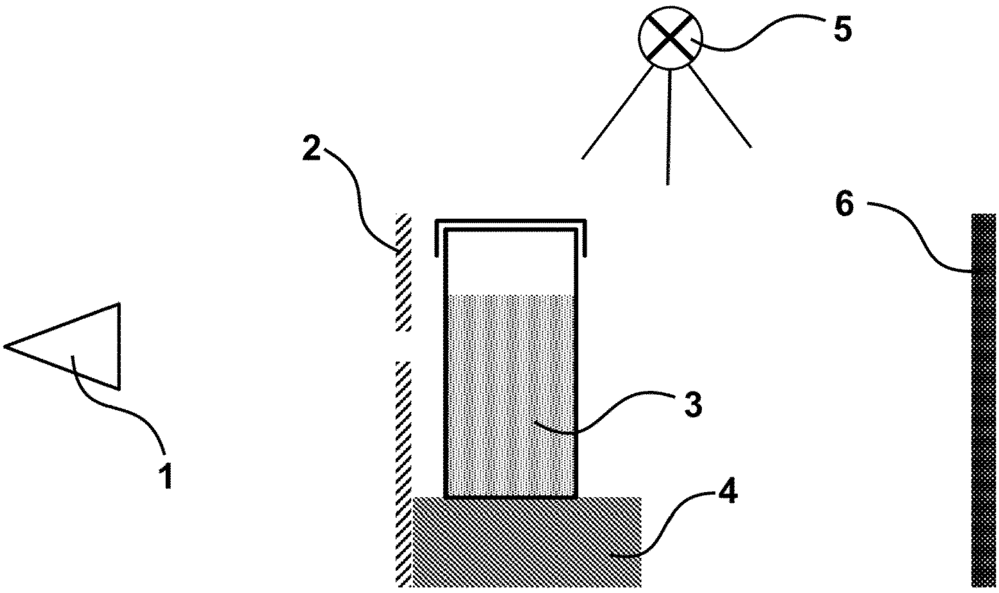


Fig. 2

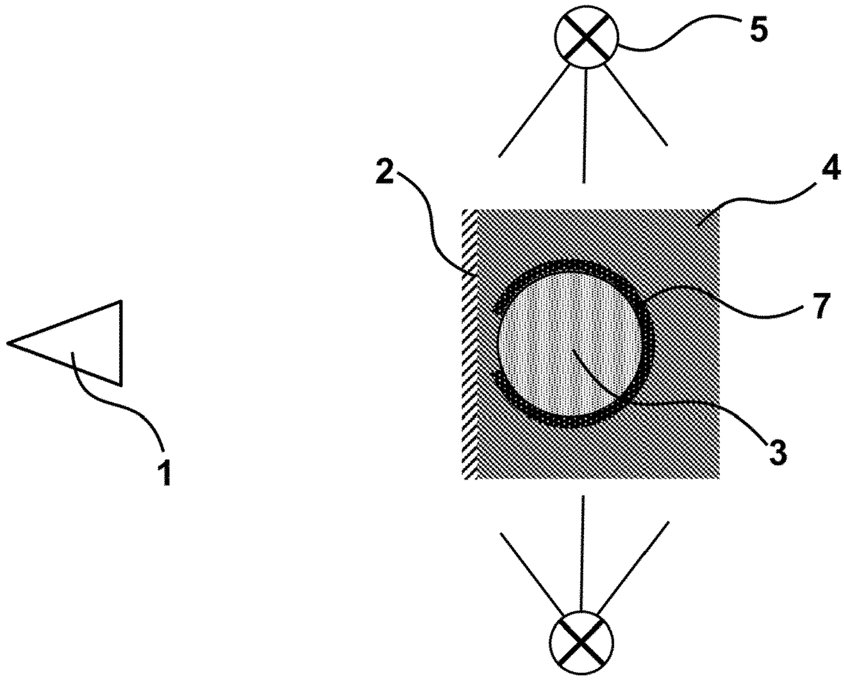


Fig. 3

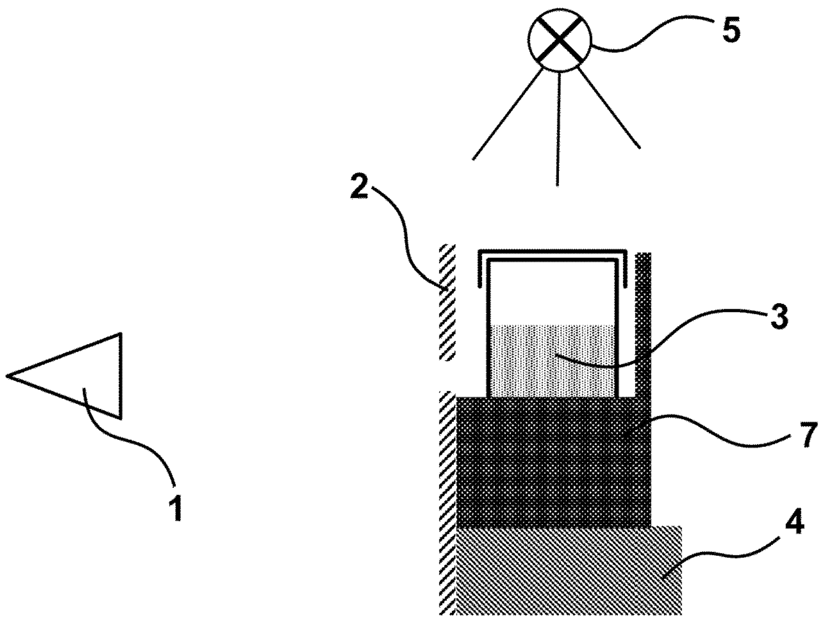


Fig. 4

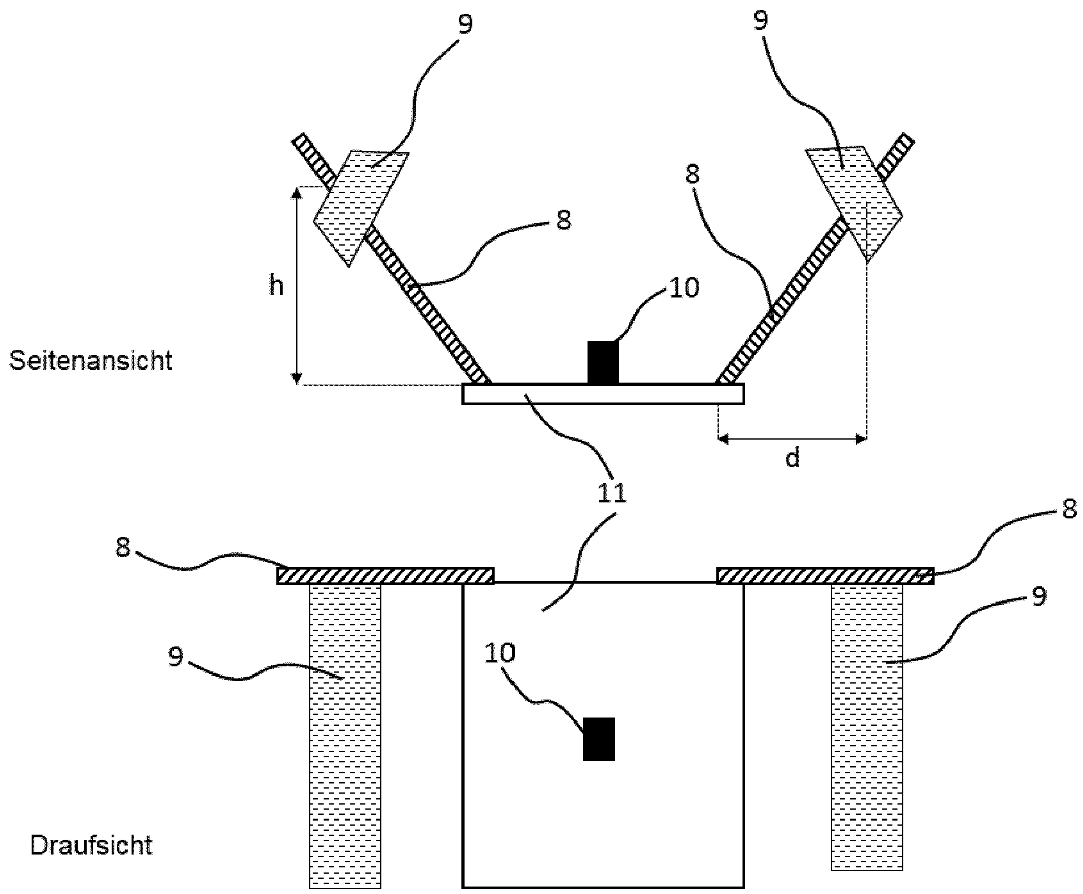


Fig. 5

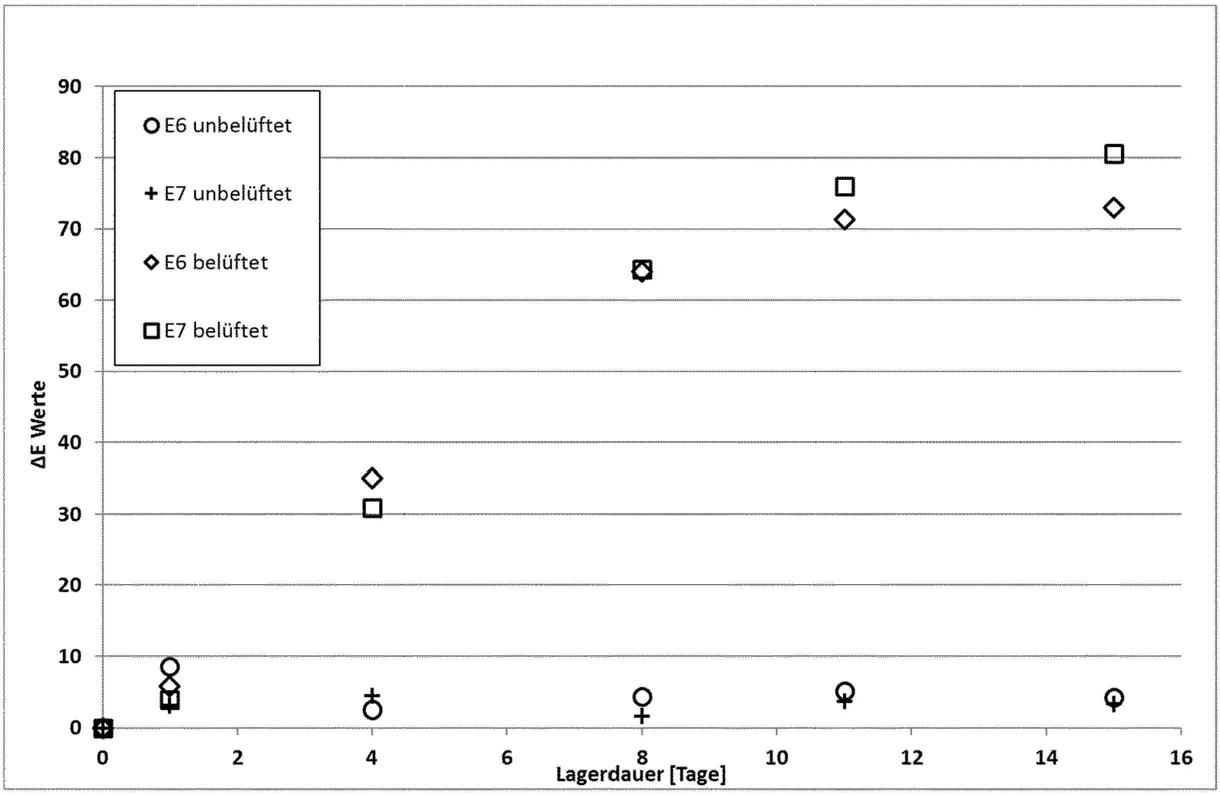
E6 unbelüftet
E7 unbelüftet
E6 belüftet
E7 belüftet
ΔE Werte
Lagerdauer [Tage]
0
10
20
30
40
50
60
70
80
90
0
2
4
6
8
10
12
14
16

Fig. 6

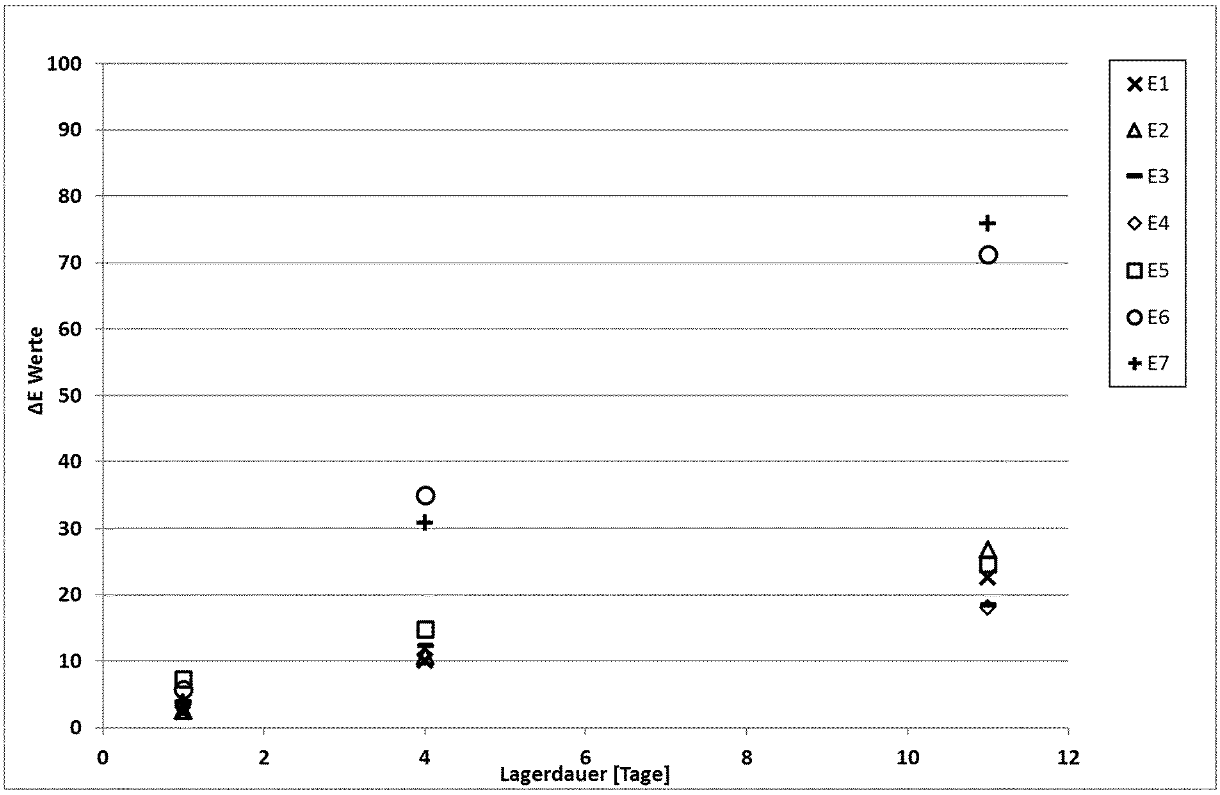
100
90
80
70
60
50
40
30
20
10
0
ΔE Werte
0
2
4
6
8
10
12
Lagerdauer [Tage]
E1
E2
E3
E4
E5
E6
E7

Fig. 7

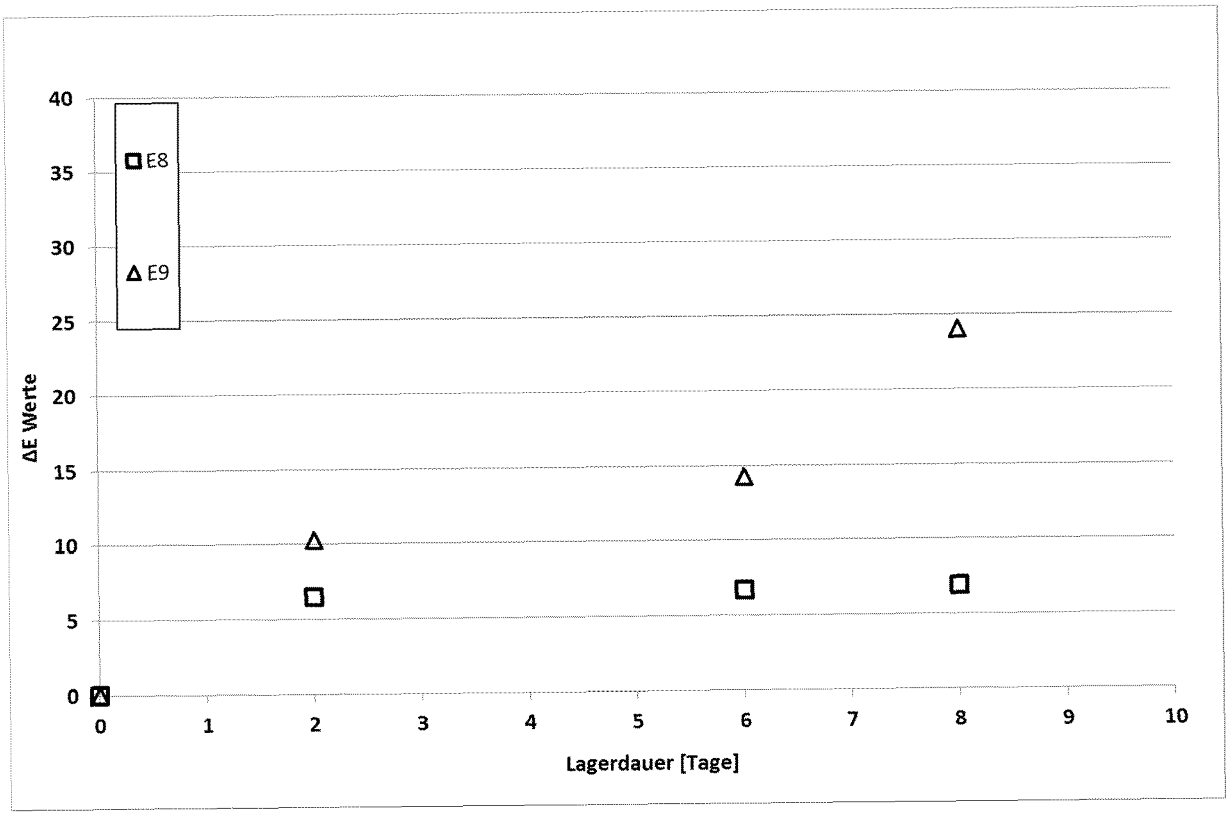

40
35
30
25
20
15
10
5
0
ΔE Werte
E8
E9
0
1
2
3
4
5
6
7
8
9
10
Lagerdauer [Tage]


Fig. 8

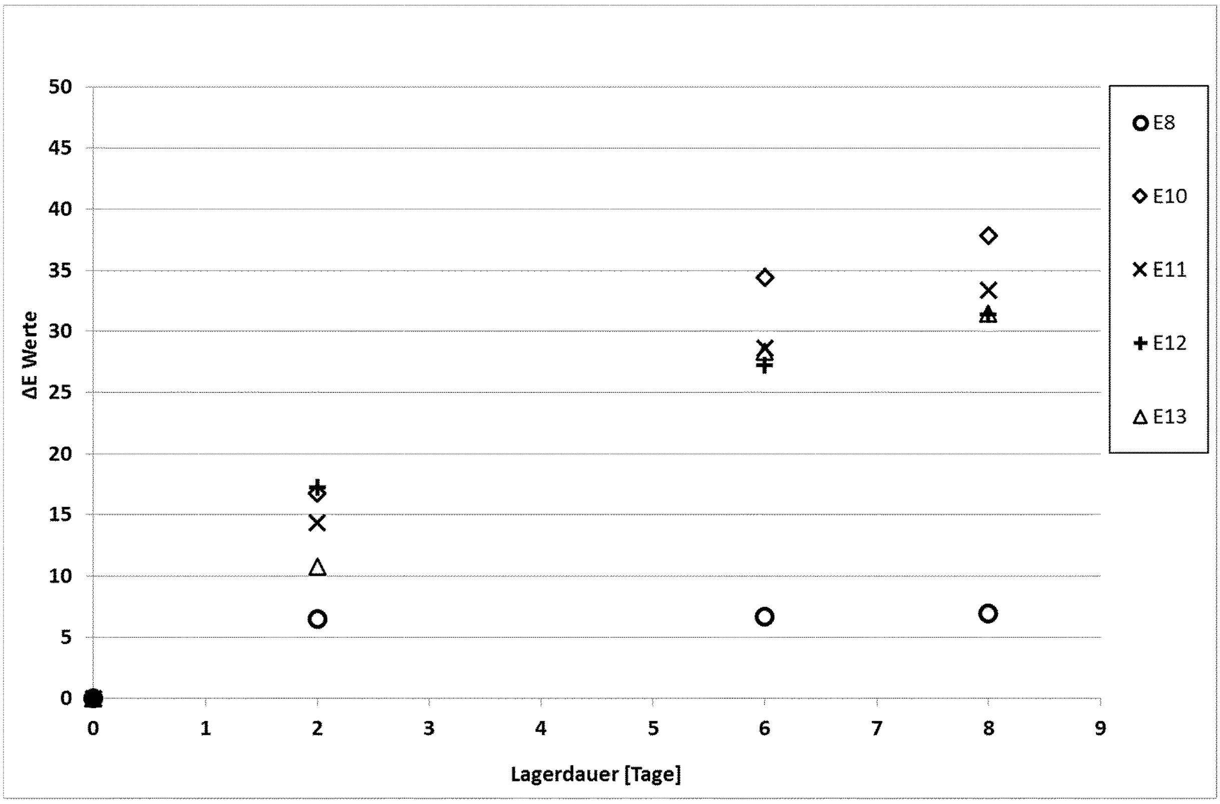
50
45
40
35
30
25
20
15
10
5
0
ΔE Werte
0
1
2
3
4
5
6
7
8
9
Lagerdauer [Tage]
E8
E10
E11
E12
E13

Fig. 9

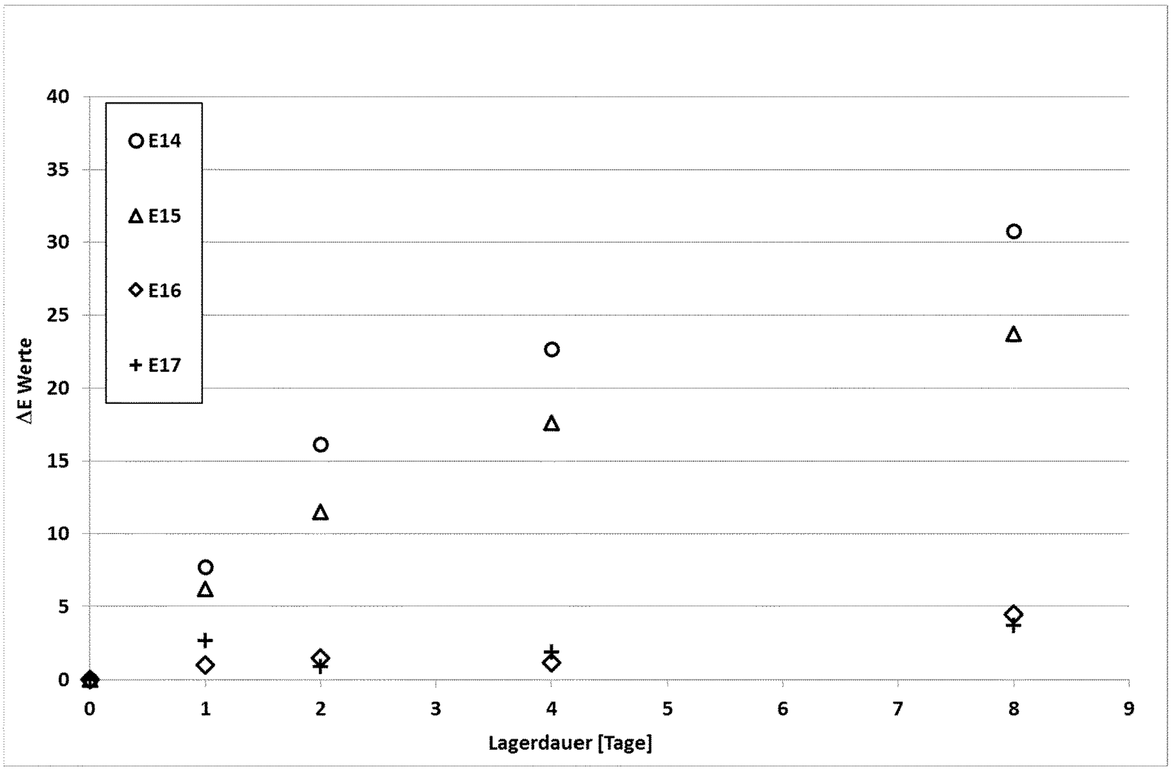
40
35
30
25
20
15
10
5
0
ΔE Werte
E14
E15
E16
E17
0
1
2
3
4
5
6
7
8
9
Lagerdauer [Tage]

Fig. 10

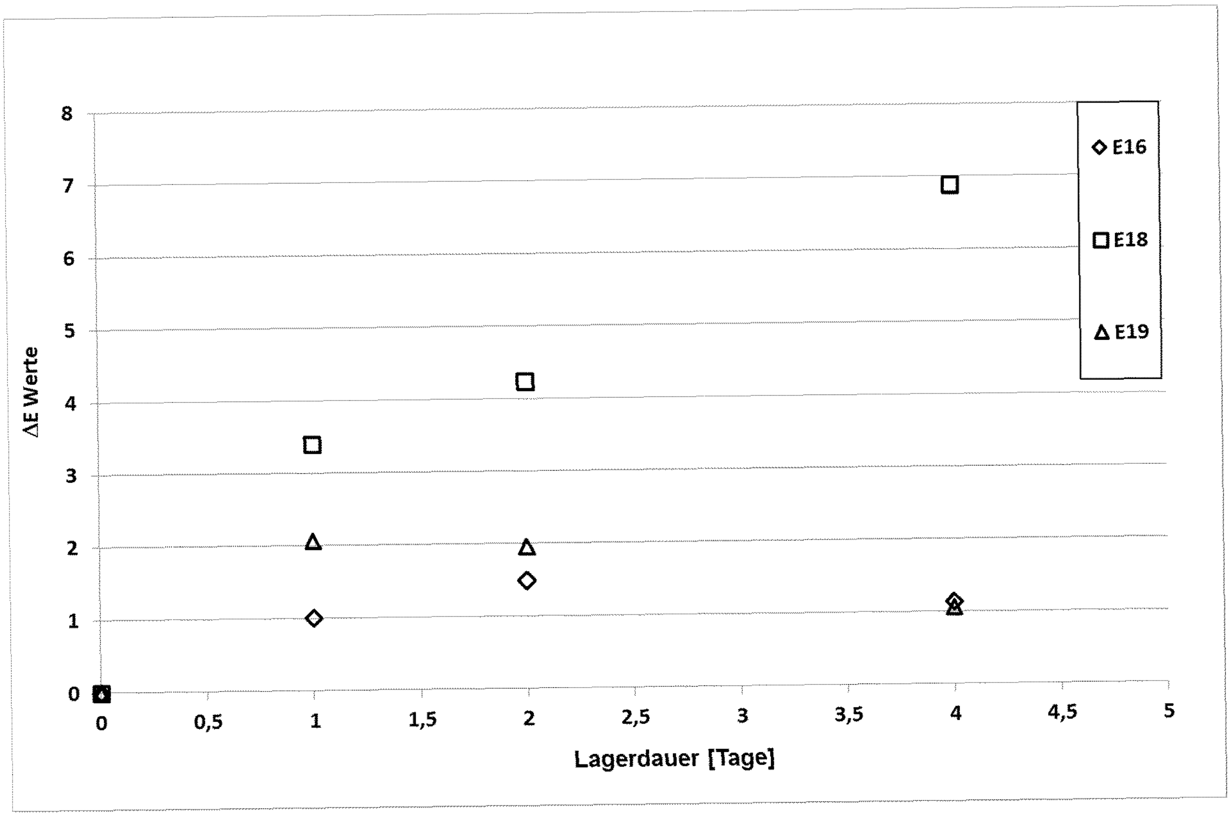
8
7
6
5
4
3
2
1
0
ΔE Werte
0
0,5
1
1,5
2
2,5
3
3,5
4
4,5
5
Lagerdauer [Tage]
E16
E18
E19

Fig. 11

Europäisches Patentamt
European Patent Office
Office européen des brevets

# EUROPÄISCHER RECHERCHENBERICHT

Nummer der Anmeldung
EP 17 20 3258

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | US 2016/159690 A1 (DUREAULT ALEX [FR] ET AL) 9. Juni 2016 (2016-06-09)<br>* Seiten 8-9, Absatz 70-71 *<br>* Ansprüche 11-20 *<br>* Seiten 9-10, Absatz 72-73 *<br>* Absätze [0007], [0011] *<br>----- | 1-8, 11-13<br>9,10,14 | INV.<br>C08G59/50<br>C08G59/56<br>C08G59/62<br>C04B26/14 |
| A | EP 1 118 628 A1 (HILTI AG [LI]) 25. Juli 2001 (2001-07-25)<br>* Ansprüche 1-20 *<br>* Absätze [0028] - [0029] *<br>----- | 1-14 | |
| A | CN 106 674 900 A (ADESSO ADVANCED MAT WUHU CO LTD) 17. Mai 2017 (2017-05-17)<br>* das ganze Dokument *<br>----- | 1-14 | |
| A | RU 2 237 695 C1 ((SPET-R) SPETSKHIMMONTAZH STOCK CO) 10. Oktober 2004 (2004-10-10)<br>* das ganze Dokument *<br>----- | 1-14 | |
| | | | RECHERCHIERTE SACHGEBIETE (IPC) |
| | | | C08G<br>C04B |

Der vorliegende Recherchenbericht wurde für alle Patentansprüche erstellt

2

| Recherchenort | Abschlußdatum der Recherche | Prüfer |
|---|---|---|
| Den Haag | 11. April 2018 | Mensah, Laure |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 17 20 3258

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-04-2018

| Im Recherchenbericht angeführtes Patentdokument | Datum der Veröffentlichung | Mitglied(er) der Patentfamilie | Datum der Veröffentlichung |
|---|---|---|---|
| US 2016159690 A1 | 09-06-2016 | AU 2014292018 A1 | 11-02-2016 |
| | | CA 2918362 A1 | 22-01-2015 |
| | | CN 105377937 A | 02-03-2016 |
| | | EP 2826796 A1 | 21-01-2015 |
| | | EP 2826798 A1 | 21-01-2015 |
| | | EP 3022245 A1 | 25-05-2016 |
| | | HK 1215716 A1 | 09-09-2016 |
| | | JP 2016532742 A | 20-10-2016 |
| | | RU 2016105299 A | 23-08-2017 |
| | | SG 11201600309R A | 26-02-2016 |
| | | US 2016159690 A1 | 09-06-2016 |
| | | WO 2015007879 A1 | 22-01-2015 |
| EP 1118628 A1 | 25-07-2001 | AU 776763 B2 | 23-09-2004 |
| | | CA 2331162 A1 | 21-07-2001 |
| | | CN 1311172 A | 05-09-2001 |
| | | DE 10002605 A1 | 09-08-2001 |
| | | EP 1118628 A1 | 25-07-2001 |
| | | ES 2225454 T3 | 16-03-2005 |
| | | JP 5043256 B2 | 10-10-2012 |
| | | JP 2001240653 A | 04-09-2001 |
| | | MX PA01000057 A | 16-08-2005 |
| | | TW I221466 B | 01-10-2004 |
| | | US 2001035111 A1 | 01-11-2001 |
| CN 106674900 A | 17-05-2017 | KEINE | |
| RU 2237695 C1 | 10-10-2004 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 2826796 A1
- EP 1040150 B1
- EP 1838750 B2

### In der Beschreibung aufgeführte Nicht-Patentliteratur

- **MICHAEL DORNBUSCH ; ULRICH CHRIST ; ROB RASING.** Epoxidharze. Vincentz Network GmbH & Co KG, 2015
- **E. LÜBBE.** Farbempfindung, Farbbeschreibung und Farbmessung. Springer Vieweg, 2013, 22ff
- **E. LÜBBE.** Farbempfindung, Farbbeschreibung und Farbmessung. Springer Vieweg, 2013, 86ff
- **E. LÜBBE.** Farbempfindung, Farbbeschreibung und Farbmessung. Springer Vieweg, 2013, 131
- European Organisation for Technical Approvals'' (EOTA). Leitlinie für europäische technische Zulassung für Metalldübel zur Verankerung im Beton. 2001